# EUROPEAN PATENT APPLICATION

(11) **EP 4 647 903 A1**
(43) Date of publication of application: **12.11.2025**
(21) Application number: 24791739.6
(22) Date of filing: 27.02.2024
(51) Int. Cl.: G06F 9/451, G06F 3/048

(54) **DISPLAY METHOD AND ELECTRONIC DEVICE**

(30) Priority: 21.04.2023 CN 202310460184
(71) Applicant: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); LI, Wei, Shenzhen, Guangdong 518129 (CN); LIU, Wenang, Shenzhen, Guangdong 518129 (CN); WANG, Jinglei, Shenzhen, Guangdong 518129 (CN)
(74) Representative: MERH-IP Matias Erny Reichl Hoffmann Patentanwälte PartG mbB
(86) International application number: PCT/CN2024/078716
(87) International publication number: WO 2024/217151

(57) **Abstract**

Embodiments of this application provide a display method and an electronic device. The method is applied to a first electronic device having a foldable display, and the first electronic device displays a first interface for a first application. The method includes: detecting, on the first interface, a first operation of starting a temporary application by a user, where the first operation does not change a physical form of the first electronic device, and the physical form includes a folded state and an unfolded state; and displaying, in response to the first operation, a second interface based on the physical form of the first electronic device, where the second interface includes the first interface and an interface for the temporary application. The solutions provided in embodiments of this application can resolve a problem of user experience interruption during cross-application redirection, thereby improving user experience.

## Description

This application claims priority to Chinese Patent Application No. 202310460184.9, filed with the China National Intellectual Property Administration on April 21, 2023 and entitled "DISPLAY METHOD AND ELECTRONIC DEVICE", which is incorporated herein by reference in its entirety.

### TECHNICAL FIELD

Embodiments of this application relate to the field of electronic devices, and in particular, to a display method and an electronic device.

### BACKGROUND

As functions of mobile terminals become increasingly powerful, the mobile terminals play an increasingly important role in daily life of users. In some application scenarios, a user expects that a screen continuously displays currently displayed content.

Currently, a common floating window in the industry can implement parallelism of a plurality of tasks. However, when the user switches from an application to another application, an interface displays only content of the another application. As a result, user experience is interrupted during cross-application redirection, leading to reduction in user experience.

### SUMMARY

Embodiments of this application provide a display method and an electronic device, which can resolve a problem of user experience interruption during cross-application redirection, thereby improving user experience.

According to a first aspect, a display method is provided. The method is applied to a first electronic device having a foldable display, and the first electronic device displays a first interface for a first application. The method includes: detecting, on the first interface, a first operation of starting a temporary application by a user, where the first operation does not change a physical form of the first electronic device, and the physical form includes a folded state and an unfolded state; and displaying, in response to the first operation, a second interface based on the physical form of the first electronic device, where the second interface includes the first interface and an interface for the temporary application.

According to the solution provided in this embodiment of this application, the first electronic device detects, on the first interface for the first application, the first operation of starting the temporary application by the user, and the first operation does not change the physical form of the first electronic device. In response to the first operation, the first electronic device may display the second interface based on the physical form of the first electronic device. The second interface includes the first interface and the interface for the temporary application. When the user switches from the first application including the first interface to the temporary application, the first electronic device may simultaneously display content of the two applications based on a current physical form of the first electronic device. In this way, a problem of user experience interruption during cross-application redirection can be resolved, thereby improving user experience.

With reference to the first aspect, in some possible implementations, the second interface may be displayed in one of the following manners: the interface for the temporary application is displayed on the first interface in a floating manner, the interface for the temporary application and the first interface are displayed on split screens, and the interface for the temporary application and the first interface are both floated on a home screen of the first electronic device.

According to the solution provided in this embodiment of this application, in response to the first operation, the first electronic device may display the second interface. The second interface includes the first interface and the interface for the temporary application. The second interface may be specifically displayed in one of the following manners: the interface for the temporary application is displayed on the first interface in a floating manner, the interface for the temporary application and the first interface are displayed on split screens, and the interface for the temporary application and the first interface are both floated on the home screen of the first electronic device. In this way, a problem of user experience interruption during cross-application redirection can be resolved, thereby improving user experience.

With reference to the first aspect, in some possible implementations, if the first electronic device is in the folded state, the second interface includes the interface for the temporary application being displayed on the first interface in a floating manner; or if the first electronic device is in the unfolded state, the second interface includes the interface for the temporary application and the first interface being displayed on split screens; or the second interface includes the interface for the temporary application being displayed on the first interface in a floating manner; or the second interface includes the interface for the temporary application and the first interface being both floated on the home screen of the first electronic device.

According to the solution provided in this embodiment of this application, when the mobile phone is in the folded state, the interface for the temporary application may be displayed on the first interface in a floating manner. When the mobile phone is in the unfolded state, the interface for the temporary application may be displayed on the first interface in a floating manner, or the interface for the temporary application and the first interface may be displayed on split screens, or the interface for the temporary application and the first interface may be both floated on the home screen of the first electronic device. In response to the first operation, the first electronic device displays an interface based on the physical form of the first electronic device, so that user experience can be further improved.

With reference to the first aspect, in some possible implementations, if the second interface includes the interface for the temporary application being displayed on the first interface in a floating manner, the method further includes: displaying a third interface in response to a second operation. The third interface includes the interface for the temporary application and the first interface being displayed on split screens, and the second operation changes the physical form of the first electronic device.

According to the solution provided in this embodiment of this application, if the second interface includes the interface for the temporary application being displayed on the first interface in a floating manner, the third interface is displayed in response to the second operation. The third interface includes the interface for the temporary application and the first interface being displayed on split screens. This can ensure that user experience is not interrupted when the physical form of the first electronic device changes. In addition, the user can clearly view content of the interface for the temporary application and content of the first interface, thereby further improving user experience.

With reference to the first aspect, in some possible implementations, the third interface further includes a first control, and the first control is used to control interface content of the temporary application to be displayed or not displayed.

According to the solution provided in this embodiment of this application, the third interface may further include the first control used to control interface content of the temporary application to be displayed or not displayed. The user may tap the control to close split-screen display, so that user experience can be further improved.

With reference to the first aspect, in some possible implementations, the interface for the temporary application includes interfaces for a plurality of temporary applications, the interfaces for the plurality of temporary applications are all displayed on the first interface in a floating manner, the third interface includes an interface for a first temporary application and the first interface being displayed on split screens, and the first temporary application is a focused application in the plurality of temporary applications.

According to the solution provided in this embodiment of this application, if the interface for the temporary application includes the interfaces for the plurality of temporary applications, and the interfaces for the plurality of temporary applications are all displayed on the first interface in a floating manner, the third interface may include the interface for the first temporary application and the first interface being displayed on split screens, and the first temporary application is a focused application that is in the plurality of temporary applications and that is displayed on the first electronic device. This can ensure that user experience is not interrupted when the physical form of the electronic device changes. In addition, because the first temporary application included in the third interface is a focused application in the plurality of temporary applications, user experience can be further improved.

With reference to the first aspect, in some possible implementations, the third interface further includes a second control, and the second control is used to control to switch to and display the interfaces for the plurality of temporary applications.

According to the solution provided in this embodiment of this application, the third interface further includes the second control, and the second control is used to control to switch to and display the interfaces for the plurality of temporary applications. The user may tap the control to display the picture in full screen, or close a current temporary split screen and display content of another floating window, so that user experience can be further improved.

With reference to the first aspect, in some possible implementations, the method further includes: displaying a fourth interface in response to a third operation. The fourth interface includes an interface for a second temporary application and the first interface being displayed on split screens, and the second temporary application includes at least one application in the plurality of temporary applications.

According to the solution provided in this embodiment of this application, the fourth interface is displayed in response to the third operation. The fourth interface includes the interface for the second temporary application and the first interface being displayed on split screens. The second temporary application includes at least one application in the plurality of temporary applications, and the at least one application in the plurality of temporary applications may be displayed through the third operation. The user may further select a temporary application expected to be displayed, so that user experience can be further improved.

With reference to the first aspect, in some possible implementations, if the second interface includes the interface for the temporary application being displayed on the first interface in a floating manner, the method further includes: displaying a fifth interface in response to a fourth operation of starting a second application by the user. The fifth interface includes the interface for the temporary application and an interface for the second application being both floated on the first interface, or the fifth interface includes the interface for the temporary application and the interface for the second application being displayed on split screens.

According to the solution provided in this embodiment of this application, the fifth interface is displayed in response to the fourth operation of starting the second application by the user. The fifth interface may include the interface for the temporary application and the interface for the second application being both floated on the first interface, or the fifth interface includes the interface for the temporary application and the interface for the second application being displayed on split screens. In this way, a problem of user experience interruption during cross-application redirection can be resolved, thereby improving user experience.

With reference to the first aspect, in some possible implementations, the method further includes: sending content of the second interface to the second electronic device in response to a fifth operation. The first interface and the interface for the temporary application that are included in the second interface are displayed on split screens on the second electronic device, and a screen size of the second electronic device is greater than a screen size of the first electronic device.

According to the solution provided in this embodiment of this application, the content of the second interface is sent to the second electronic device in response to the fifth operation, and the first interface and the interface for the temporary application that are included in the second interface are displayed on split screens on the second electronic device. The screen size of the second electronic device is greater than the screen size of the first electronic device. In this way, user experience is not interrupted during cross-device redirection, thereby improving user experience.

According to a second aspect, a display method is provided. The method is applied to a second electronic device. The method includes: receiving content of a second interface sent by a first electronic device, where the second interface includes a first interface for a first application and an interface for a temporary application, and a screen size of the second electronic device is greater than a screen size of the first electronic device; and displaying the first interface for the first application and the interface for the temporary application on split screens.

According to the solution provided in this embodiment of this application, the second electronic device receives the content of the second interface sent by the first electronic device, and the second interface includes the first interface for the first application and the interface for the temporary application. The second electronic device may display the first interface for the first application and the interface for the temporary application on split screens. In this way, user experience is not interrupted during cross-device redirection, thereby improving user experience.

According to a third aspect, an electronic device is provided. The electronic device has a function of implementing behavior in the foregoing aspects and the possible implementations of the foregoing aspects. The function may be implemented by hardware, or may be implemented by hardware executing corresponding software. The hardware or the software includes one or more modules or units corresponding to the foregoing function.

According to a fourth aspect, an electronic device is provided, including: one or more processors; a memory; one or more applications; and one or more computer programs. The one or more computer programs are stored in the memory. The one or more computer programs include instructions. When the instructions are executed by the electronic device, the electronic device is enabled to perform the method in any possible implementation of the first aspect or the second aspect.

According to a fifth aspect, a chip system is provided, including at least one processor. When program instructions are executed in the at least one processor, a function of the method in any possible implementation of the first aspect or the second aspect on the electronic device is implemented.

According to a fifth aspect, a computer storage medium is provided, including computer instructions. When the computer instructions are run on an electronic device, the electronic device is enabled to perform the method in any possible implementation of the first aspect or the second aspect.

According to a sixth aspect, a computer program product is provided. When the computer program product is run on an electronic device, the electronic device is enabled to perform the method in any possible design of the first aspect or the second aspect.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3(a) to FIG. 3(e) is a diagram of a group of GUIs according to an embodiment of this application;
FIG. 4(a) to FIG. 4(e) is a diagram of another group of GUIs according to an embodiment of this application;
FIG. 5(a) and FIG. 5(b) is a diagram of still another group of GUIs according to an embodiment of this application;
FIG. 6(a) and FIG. 6(b) is a diagram of yet another group of GUIs according to an embodiment of this application;
FIG. 7(a) to FIG. 7(c) is a diagram of yet another group of GUIs according to an embodiment of this application;
FIG. 8(a) to FIG. 8(c) is a diagram of yet another group of GUIs according to an embodiment of this application;
FIG. 9(a) to FIG. 9(d) is a diagram of yet another group of GUIs according to an embodiment of this application;
FIG. 10(a) to FIG. 10(f) is a diagram of yet another group of GUIs according to an embodiment of this application;
FIG. 11(a) to FIG. 11(f) is a diagram of yet another group of GUIs according to an embodiment of this application;
FIG. 12(a) to FIG. 12(e) is a diagram of yet another group of GUIs according to an embodiment of this application;
FIG. 13(a) to FIG. 13(k) is a diagram of yet another group of GUIs according to an embodiment of this application;
FIG. 14(a) to FIG. 14(g) is a diagram of yet another group of GUIs according to an embodiment of this application;
FIG. 15(a) to FIG. 15(d) is a diagram of yet another group of GUIs according to an embodiment of this application;
FIG. 16(a) to FIG. 16(c) is a diagram of yet another group of GUIs according to an embodiment of this application;
FIG. 17(a) to FIG. 17(c) is a diagram of yet another group of GUIs according to an embodiment of this application;
FIG. 18 is a diagram of a display method according to an embodiment of this application;
FIG. 19 is a diagram of another display method according to an embodiment of this application;
FIG. 20 is a block diagram of an electronic device according to an embodiment of this application; and
FIG. 21 is a block diagram of another electronic device according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

In the following, terms "first" and "second" are merely intended for a purpose of description, and shall not be understood as an indication or implication of relative importance or implicit indication of a quantity of indicated technical features. Therefore, a feature defined by "first" or "second" may explicitly or implicitly include one or more features.

A solution provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

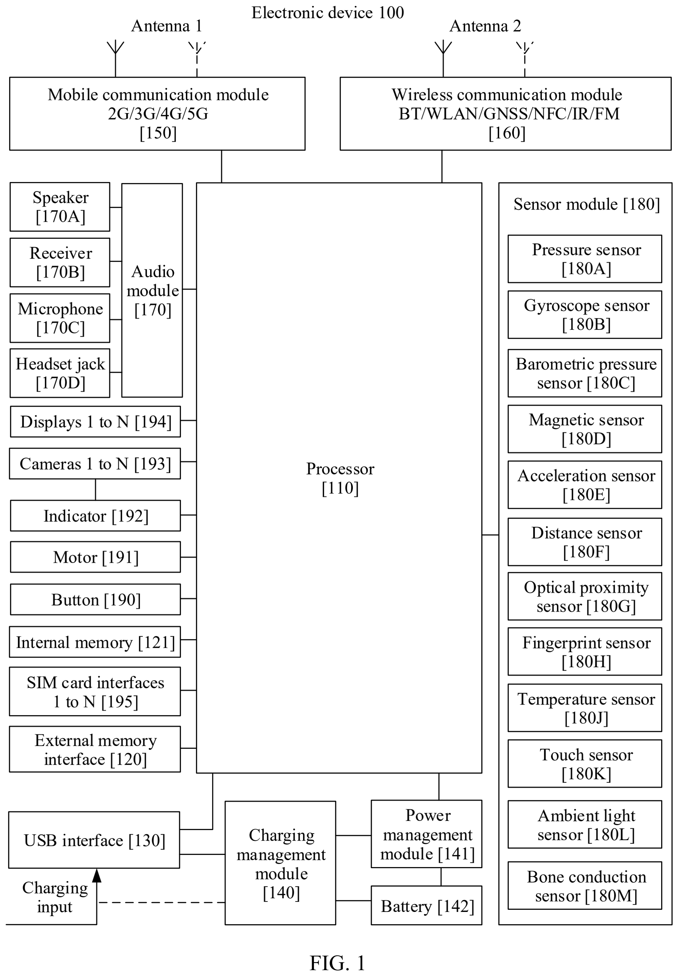

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). The I2S interface may be configured to perform audio communication. The PCM interface may also be configured to perform audio communication, and sample, quantize, and code an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. The GPIO interface may be configured by software. The GPIO interface may be configured as a control signal or a data signal. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (leakage of electricity and impedance).

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, a mode of transfer between human brain neurons, and may further continuously perform self learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a voice playing function or an image playing function), and the like. The data storage area may store data (such as audio data and an address book) and the like that are created during use of the electronic device 100. In addition, the internal memory 121 may include a high-speed random access memory, or may include a non-volatile memory, for example, at least one magnetic disk storage device, a flash memory, or universal flash storage (universal flash storage, UFS).

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

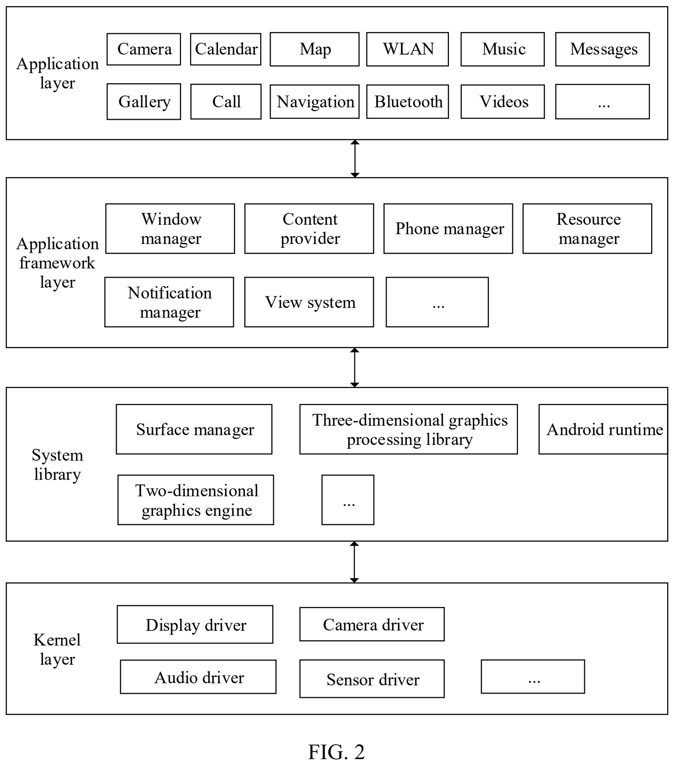

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library layer, and a kernel layer from top to bottom. The application layer may include a series of application packages.

As shown in FIG. 2, the application packages may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enables these data to be accessible to an application. The data may include a video, an image, an audio, calls that are made and answered, a browsing history and bookmarks, an address book, and the like.

The view system includes visual controls such as a control for displaying a text and a control for displaying a picture. The view system may be used to construct an application. A display interface may include one or more views. For example, a display interface including an SMS message notification icon may include a view for displaying text and a view for displaying a picture..

The phone manager is used to provide a communication function for the electronic device 100, for example, management of a call status (including answering, declining, or the like).

The resource manager provides an application with various resources, such as a localized character string, an icon, a picture, a layout file, and a video file.

The notification manager enables an application to display notification information in a status bar, and may be used to convey a notification-type message. The displayed notification information may automatically disappear after a short pause without user interaction. For example, the notification manager is used to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is given, the electronic device vibrates, or an indicator light blinks.

The Android runtime includes a core library and a virtual machine. The Android runtime is responsible for scheduling and management of the Android system.

The core library includes two parts: a performance function that needs to be called in a Java language and a core library of Android.

The system library may include a plurality of functional modules, for example, a surface manager (surface manager), a media library (media libraries), a three-dimensional graphics processing library (for example, an OpenGL ES), and a 2D graphics engine (for example, an SGL).

The kernel layer is a layer between hardware and software. The kernel layer includes at least a display driver, a camera driver, an audio driver, and a sensor driver.

As functions of mobile terminals become increasingly powerful, the mobile terminals play an increasingly important role in daily life of users. In some application scenarios, a user expects that a screen continuously displays currently displayed content.

Currently, a common floating window in the industry can implement parallelism of a plurality of tasks. However, when the user switches from an application to another application, an interface displays only content of the another application. As a result, user experience is interrupted during cross-application redirection, leading to reduction in user experience.

This application provides a display method, which can resolve a problem of user experience interruption during cross-application redirection, thereby improving user experience.

For ease of understanding, in the following embodiments of this application, an electronic device having the structures shown in FIG. 1 and FIG. 2 is used as an example to describe in detail, with reference to the accompanying drawings and application scenarios, a display method provided in embodiments of this application. The electronic device in this embodiment of this application has a folding function. The electronic device includes a folded state and an unfolded state. The folded state may be understood as a state in which two housings included in the electronic device are on different planes, and the unfolded state may be understood as a state in which the two housings included in the electronic device are on a same plane.

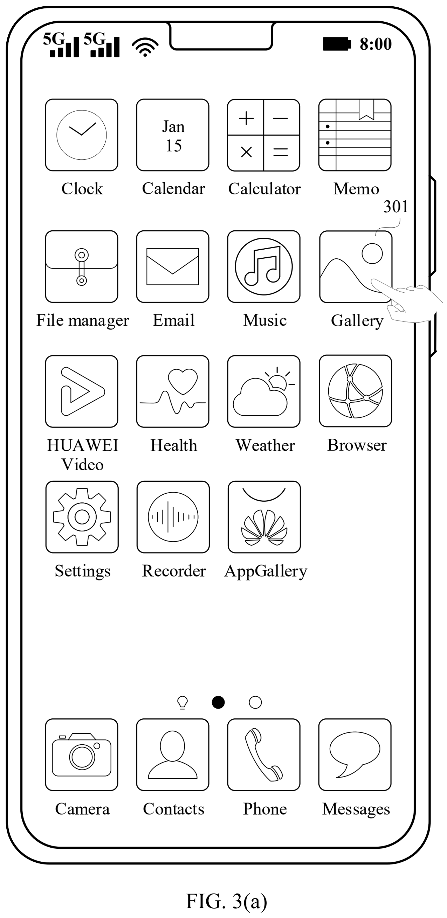

FIG. 3(a) to FIG. 3(e) show a group of GUIs of a mobile phone. FIG. 3(a) to FIG. 3(e) show interfaces displayed after a user shares a picture in the mobile phone to an application 1. The mobile phone is currently in a folded state.

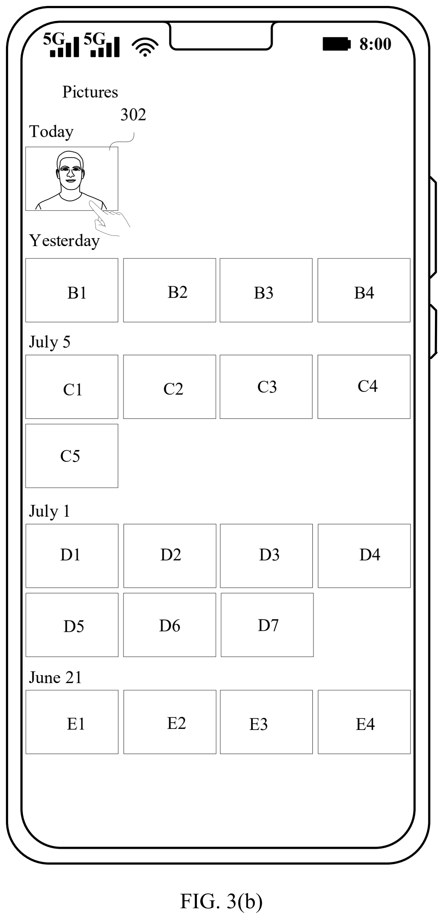

Refer to a GUI shown in FIG. 3(a). The GUI is a home screen of the mobile phone. After detecting an operation of tapping an icon 301 of Gallery on the home screen by the user, the mobile phone may start Gallery, and display a GUI shown in FIG. 3(b).

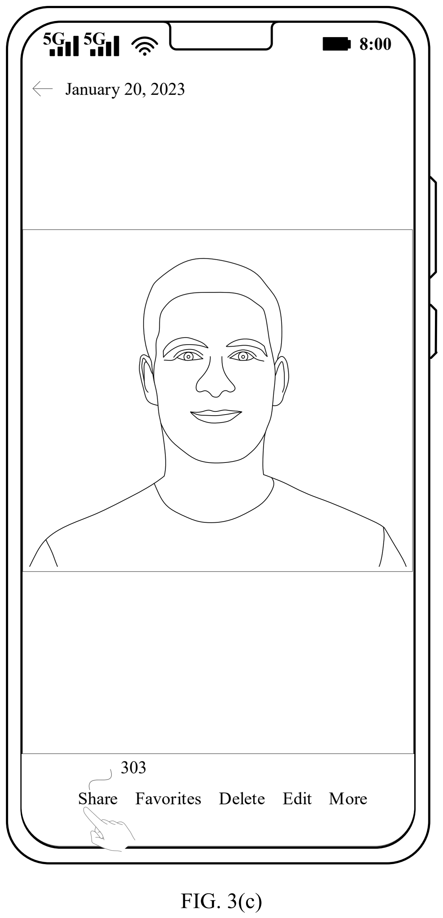

Refer to the GUI shown in FIG. 3(b). Pictures in Gallery are displayed on the interface. After detecting an operation of tapping, by the user, a picture 302 including a portrait, the mobile phone may display a GUI shown in FIG. 3(c).

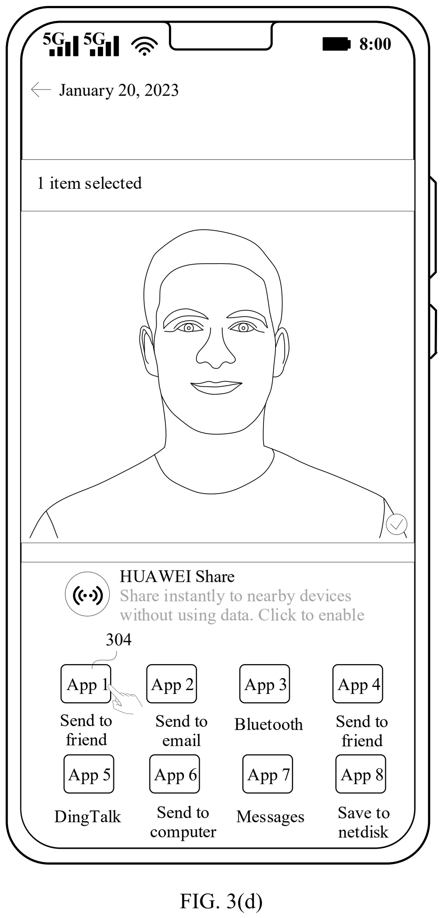

Refer to the GUI shown in FIG. 3(c). The picture including the portrait is displayed on the interface, along with a bar frame displayed at the bottom of the interface. The bar frame includes function buttons such as Share, Favorites, Delete, Edit, and More. The user may tap any one of the function buttons. After detecting an operation of tapping a function button 303 of Share by the user, the mobile phone may display a GUI shown in FIG. 3(d).

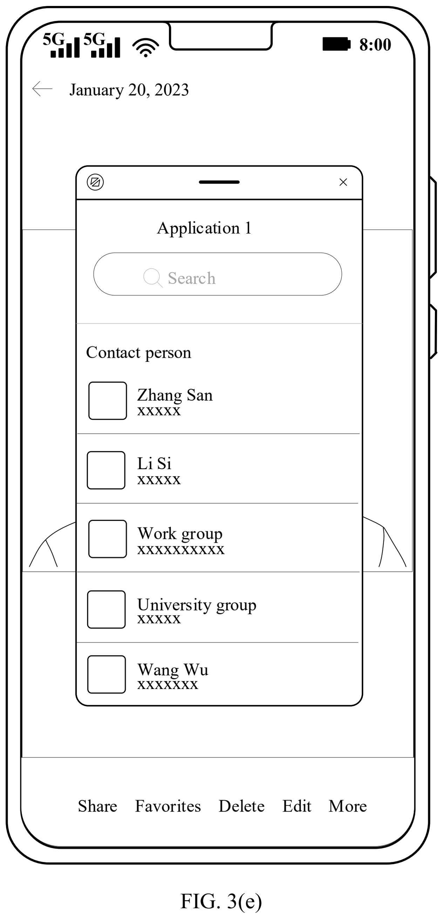

Refer to the GUI shown in FIG. 3(d). A bar frame is displayed at the bottom of the interface, and the bar frame includes a plurality of icons: HUAWEI Share, an app 1, an app 2, an app 3, an app 4, an app 5, an app 6, an app 7, and an app 8. The user may select an application to share the picture selected in FIG. 3(d) to another device or application. After detecting an operation of tapping an icon 304 of the app 1 by the user, the mobile phone may display a GUI shown in FIG. 3(e).

Refer to the GUI shown in FIG. 3(e). It can be learned that in this case, a main interface for the application 1 (the main interface for the application 1 includes a plurality of contact persons, such as Zhang San, Li Si, and Work group) is floated on the picture including the portrait.

According to the solution provided in this embodiment of this application, when the mobile phone is in the folded state, if the user shares a picture to the application 1, the main interface for the application 1 is floated on the picture, so that the user can continue to view the shared picture in a process of using the application 1. In other words, when the user switches from an application to another application, an interface may simultaneously display content of the two applications. In this way, a problem of user experience interruption during cross-application redirection can be resolved, thereby improving user experience.

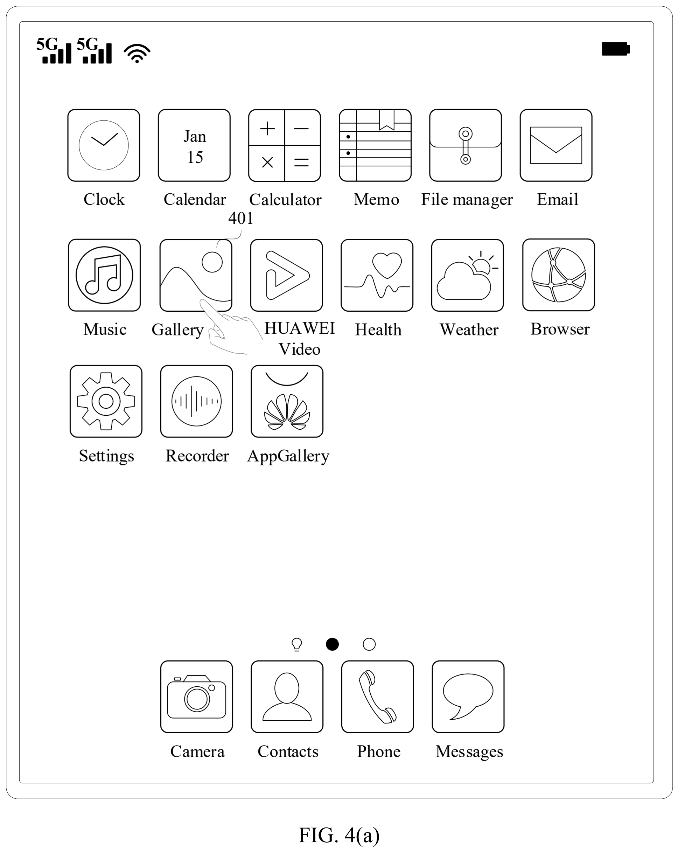

FIG. 4(a) to FIG. 4(e) show a group of GUIs of a mobile phone. FIG. 4(a) to FIG. 4(e) show interfaces displayed after a user shares a picture in the mobile phone to an application 1. The mobile phone is currently in an unfolded state.

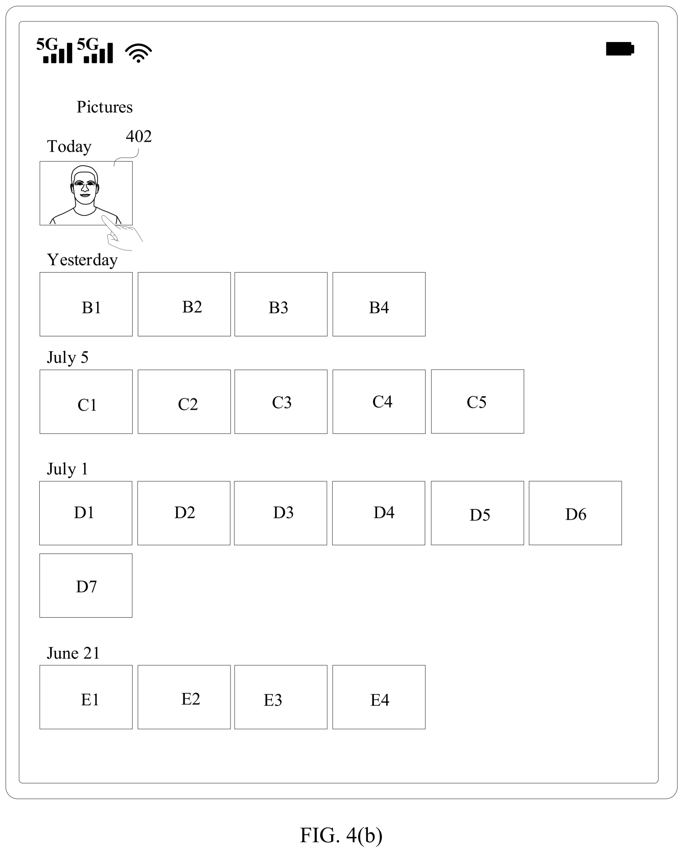

Refer to a GUI shown in FIG. 4(a). The GUI is a home screen of the mobile phone. After detecting an operation of tapping an icon 401 of Gallery on the home screen by the user, the mobile phone may start Gallery, and display a GUI shown in FIG. 4(b).

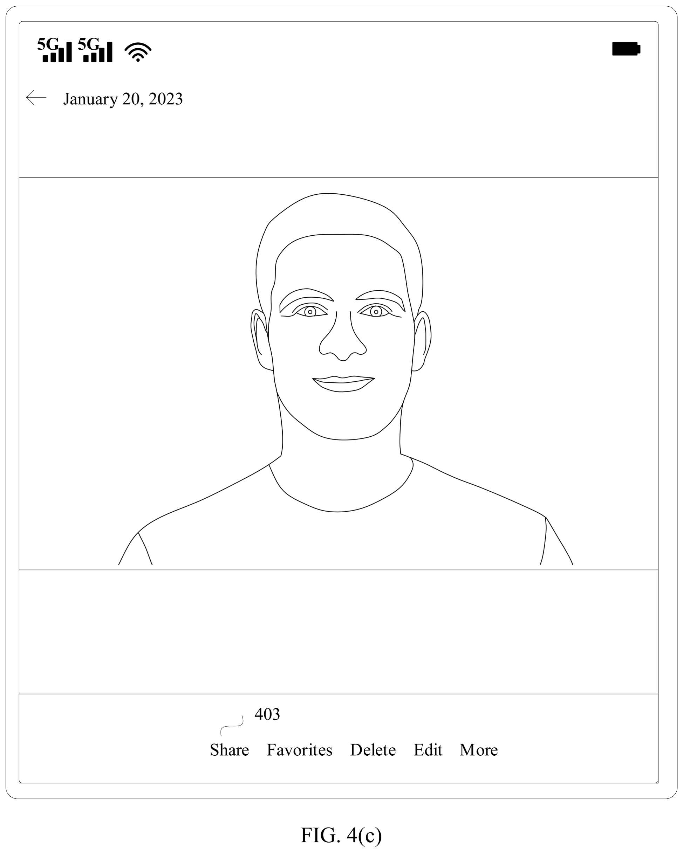

Refer to the GUI shown in FIG. 4(b). Pictures in Gallery are displayed on the interface. After detecting an operation of tapping, by the user, a picture 402 including a portrait, the mobile phone may display a GUI shown in FIG. 4(c).

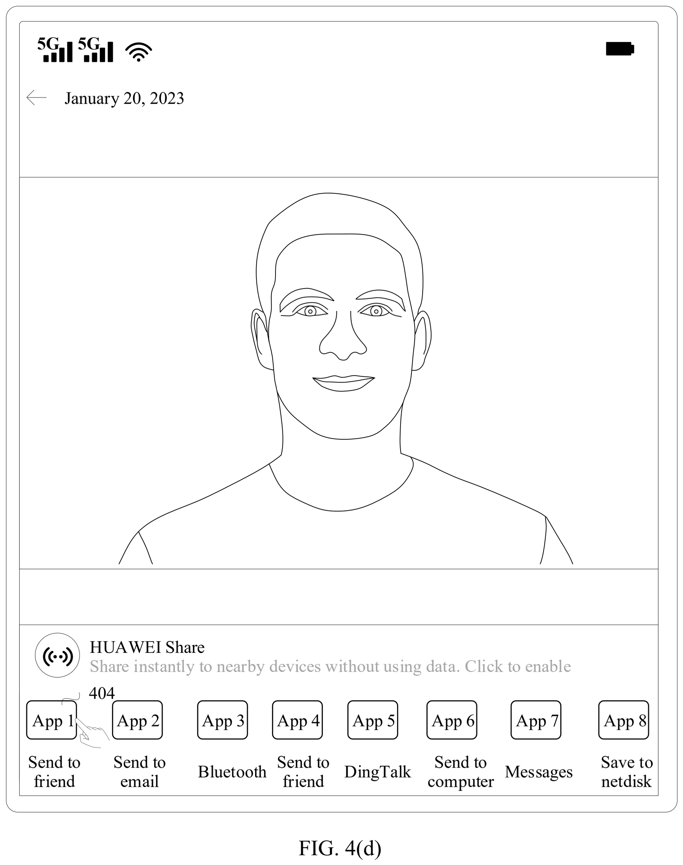

Refer to the GUI shown in FIG. 4(c). The picture including the portrait is displayed on the interface, along with a bar frame displayed at the bottom of the interface. The bar frame includes function buttons such as Share, Favorites, Delete, Edit, and More. The user may tap any one of the function buttons. After detecting an operation of tapping a function button 403 of Share by the user, the mobile phone may display a GUI shown in FIG. 4(d).

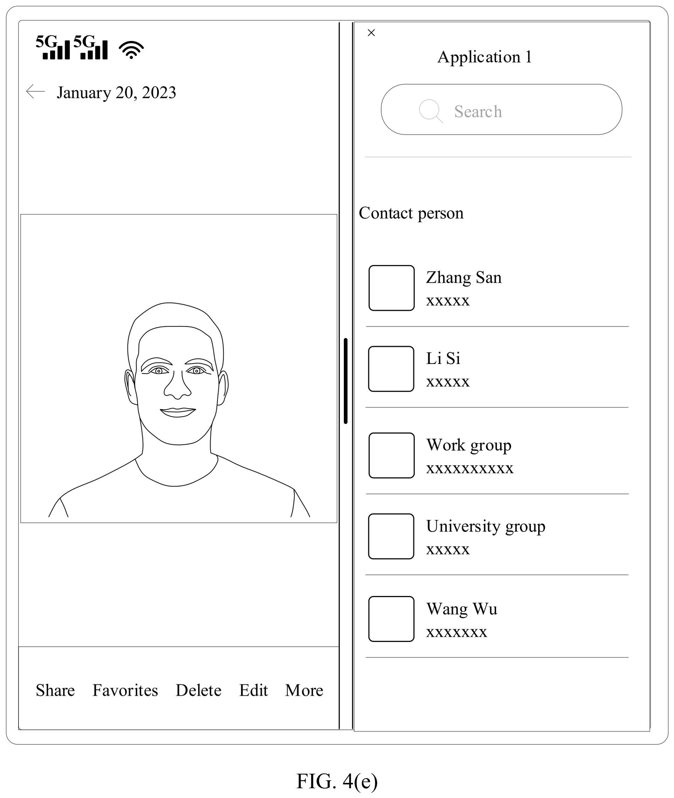

Refer to the GUI shown in FIG. 4(d). A bar frame is displayed at the bottom of the interface, and the bar frame includes a plurality of icons: HUAWEI Share, an app 1, an app 2, an app 3, an app 4, an app 5, an app 6, an app 7, and an app 8. The user may select an application to share the picture selected in FIG. 4(d) to another device or application. After detecting an operation of tapping an icon 404 of the app 1 by the user, the mobile phone may display a GUI shown in FIG. 4(e).

Refer to the GUI shown in FIG. 4(e). It can be learned that in this case, a main interface for the application 1 (the main interface for the application 1 includes a plurality of contact persons, such as Zhang San, Li Si, and Work group) is used as a temporary task and is displayed on split screens with the picture including the portrait. That is, the main interface for the application 1 is displayed on a right side of a screen, and the picture including the portrait is displayed on a left side of the screen.

According to the solution provided in this embodiment of this application, when the mobile phone is in the unfolded state, if the user shares a picture to the application 1, the main interface for the application 1 and the picture are displayed on split screens, so that the user can continue to view the shared picture in a process of using the application 1. In other words, when the user switches from an application to another application, an interface may simultaneously display content of the two applications. In this way, a problem of user experience interruption during cross-application redirection can be resolved, thereby improving user experience.

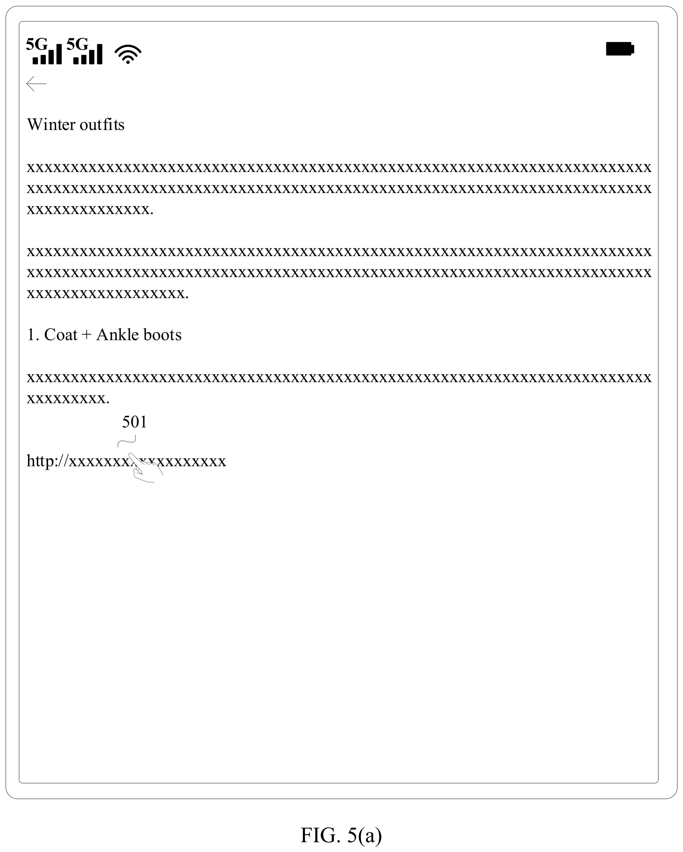

With reference to FIG. 5(a) to FIG. 8(c), the following describes an example of a scenario of cross-application/intra-application redirection of a mobile phone in an unfolded state.

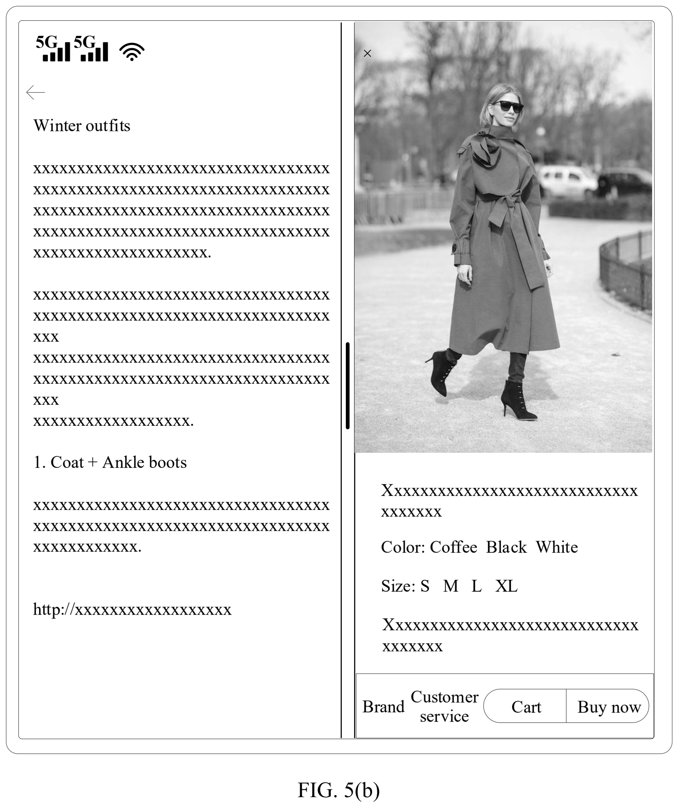

FIG. 5(a) and FIG. 5(b) show a group of GUIs of a mobile phone. Refer to a GUI shown in FIG. 5(a). The GUI includes an article about winter outfits. There is a link at the end of the article, and a user may tap the link to access another application. After detecting an operation of tapping the link 501 by the user, the mobile phone may display a GUI shown in FIG. 5(b).

Refer to the GUI shown in FIG. 5(b). It can be learned that in this case, an opened interface corresponding to the link is displayed as a temporary task and is displayed on split screens with the interface for the article about winter outfits. That is, the opened interface corresponding to the link is displayed on a right side of a screen, and the interface for the article about winter outfits on a left side of the screen. While viewing content corresponding to the link, the user may continue to browse the article about winter outfits. In this way, a problem of user experience interruption during cross-application redirection can be resolved, thereby improving user experience.

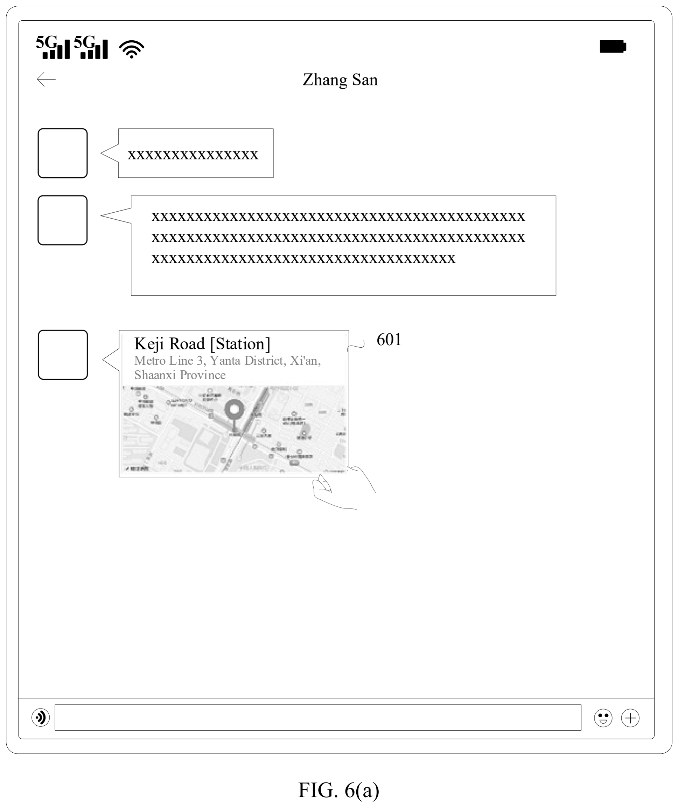

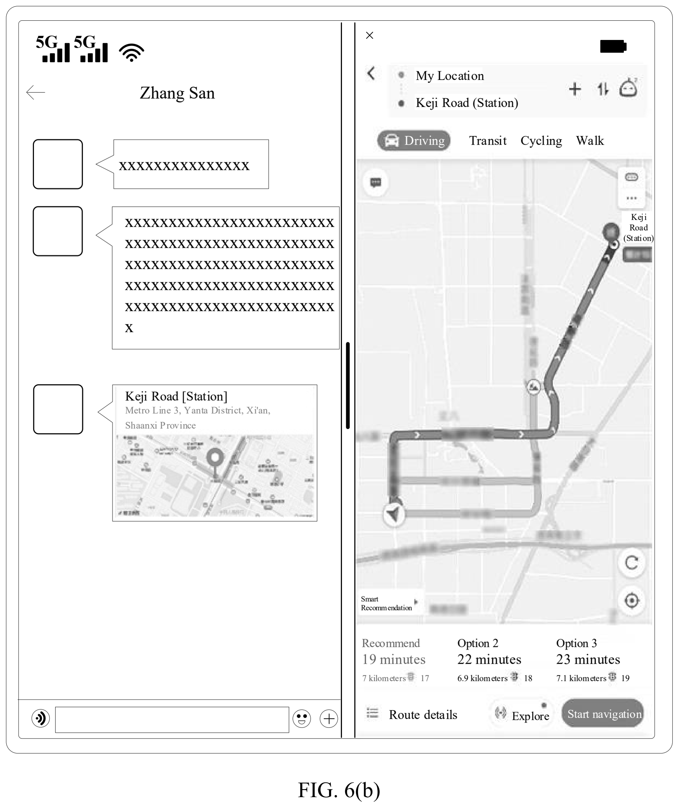

FIG. 6(a) and FIG. 6(b) show a group of GUIs of a mobile phone. Refer to a GUI shown in FIG. 6(a). The GUI includes an interface for chatting with a contact person Zhang San. The interface displays location information sent by Zhang San. After detecting an operation of tapping an icon 601 of the location information by a user, the mobile phone may display a GUI shown in FIG. 6(b).

Refer to the GUI shown in FIG. 6(b). It can be seen that, in this case, the interface for chatting with the contact person Zhang San and an opened interface corresponding to the location information are displayed on split screens. That is, the opened interface corresponding to the location information is displayed on a right side of a screen, and the interface for chatting with the contact person Zhang San is displayed on a left side of the screen. When viewing the location, the user may continue to view chat content with the contact person Zhang San or even continue to chat with Zhang San. In this way, a problem of user experience interruption during cross-application redirection can be resolved, thereby improving user experience.

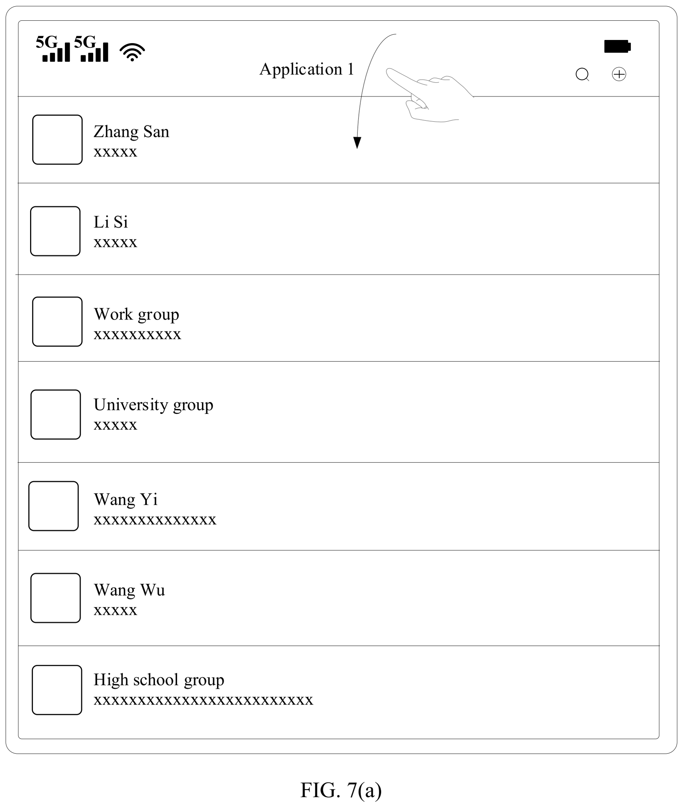

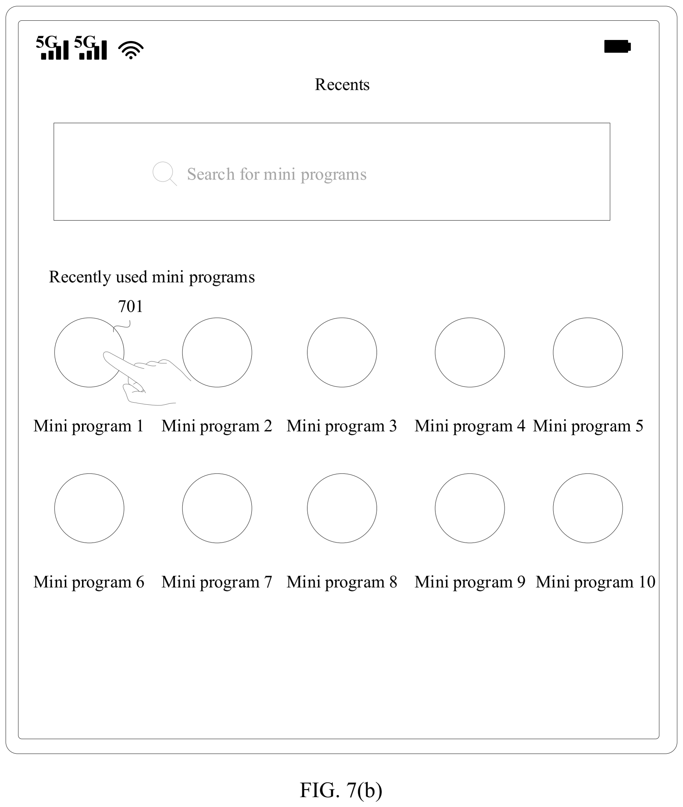

FIG. 7(a) to FIG. 7(c) show a group of GUIs of a mobile phone. Refer to a GUI shown in FIG. 7(a). The GUI is a main interface for an application 1. After detecting an operation of sliding by a user according to a direction shown in the figure, the mobile phone may display a GUI shown in FIG. 7(b).

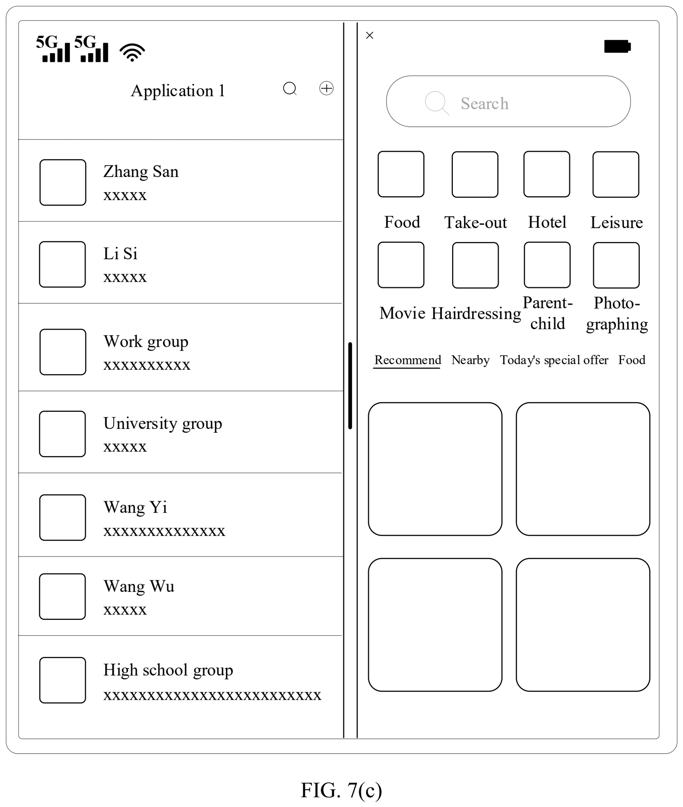

Refer to the GUI shown in FIG. 7(b). A plurality of mini programs are displayed on the interface, including a mini program 1, a mini program 2, a mini program 3, and the like. The user may tap any mini program. After detecting an operation of tapping an icon 701 of the mini program 1, the mobile phone may display a GUI shown in FIG. 7(c).

Refer to the GUI shown in FIG. 7(c). It can be learned that an opened interface corresponding to the mini program 1 is displayed as a temporary task and is displayed on split screens with the main interface for the application 1. That is, the opened interface corresponding to the mini program 1 is displayed on a right side of a screen, and the main interface for the application 1 is displayed on a left side of the screen. When viewing content corresponding to the mini program 1, the user may continue to use the application 1 to chat with a contact person. In this way, a problem of user experience interruption during intra-application redirection can be resolved, thereby improving user experience.

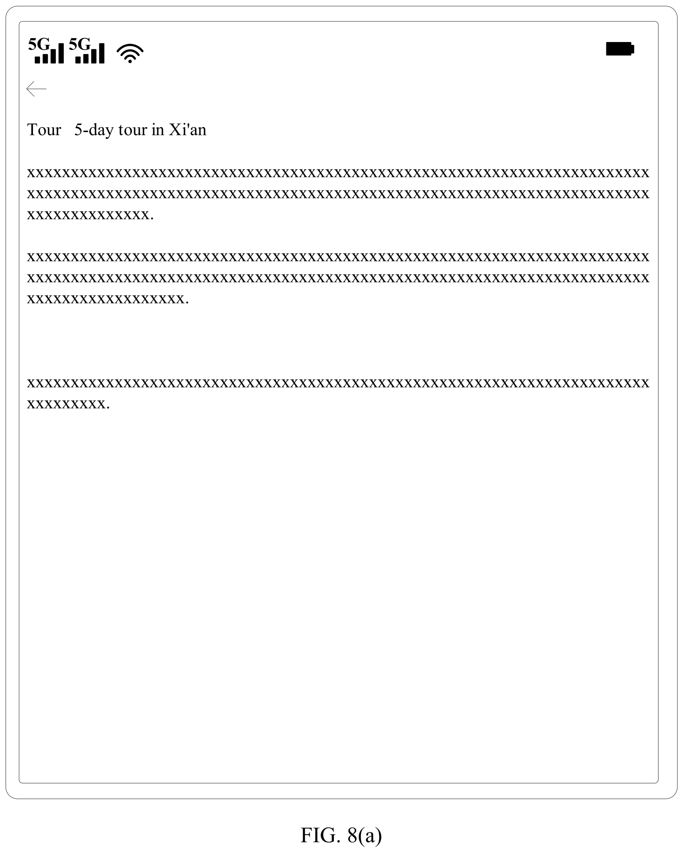

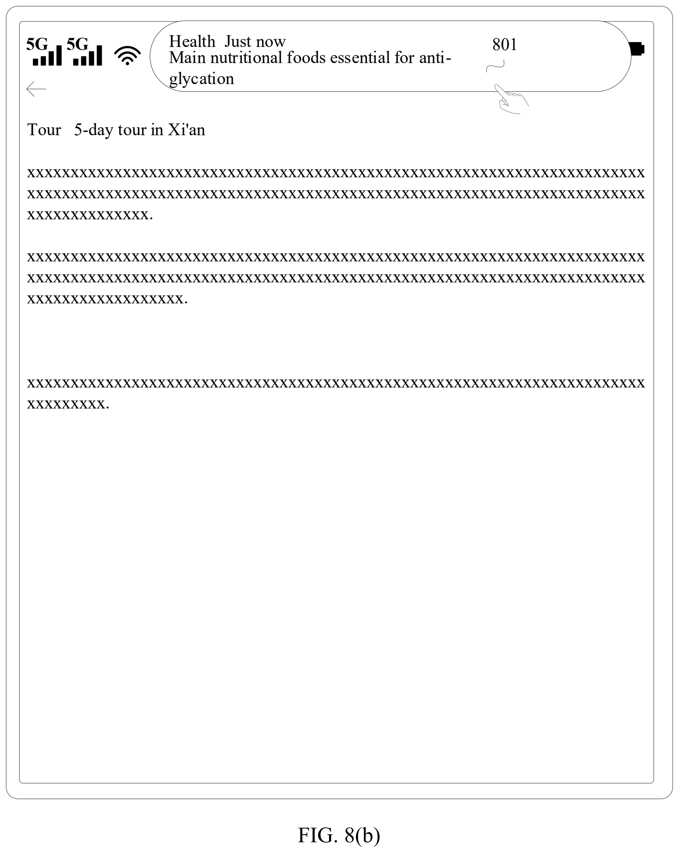

FIG. 8(a) to FIG. 8(c) show a group of GUIs of a mobile phone. Refer to a GUI shown in FIG. 8(a). The GUI includes a travel-related guide. A user may browse the travel-related guide on a current interface. In some cases, an application may display a message in a pop-up box. Assuming that a message is displayed in a health pop-up box, a GUI shown in FIG. 8(b) may be displayed.

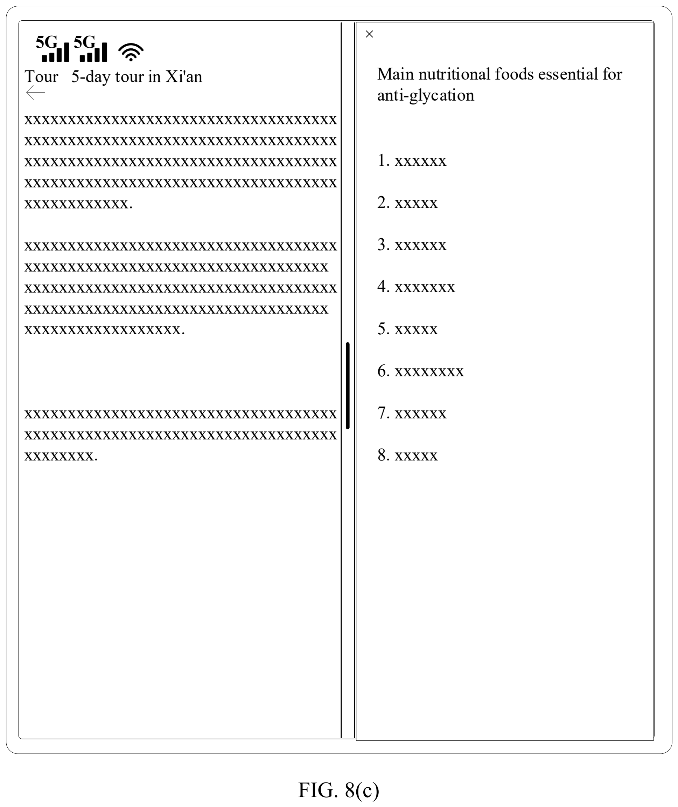

Refer to the GUI shown in FIG. 8(b). It can be learned that in this case, the message displayed in the health pop-up box is displayed on the top of the interface, and a theme of the message is "Main nutritional foods to avoid for anti-glycation". The user may tap the message to view more details. After detecting an operation of tapping the pop-up box 801 by the user, the mobile phone may display a GUI shown in FIG. 8(c).

Refer to the GUI shown in FIG. 8(c). It can be learned that in this case, a health interface with the theme of "Main nutritional foods to avoid for anti-glycation" is displayed as a temporary task and is displayed on split screens with the interface for the travel-related guide. That is, the health interface with the theme of "Main nutritional foods to avoid for anti-glycation" is displayed on a right side of a screen, and the interface for the travel-related guide is displayed on a left side of the screen. While viewing details of "Main nutritional foods to avoid for anti-glycation", the user may continue to browse the travel-related guide. In this way, a problem of user experience interruption during cross-application redirection can be resolved, thereby improving user experience.

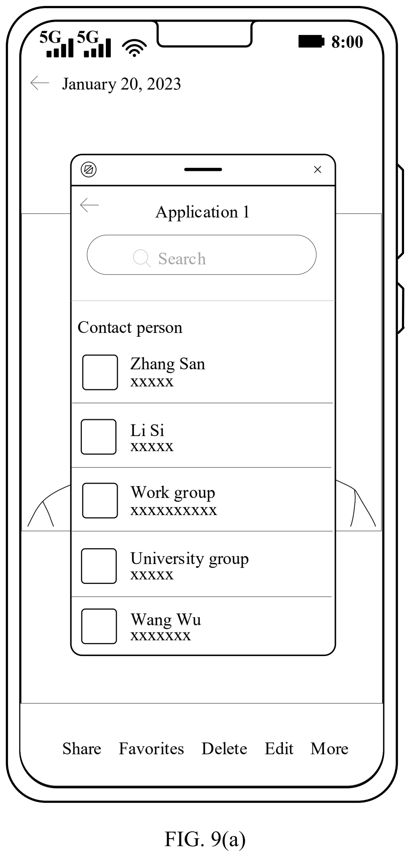

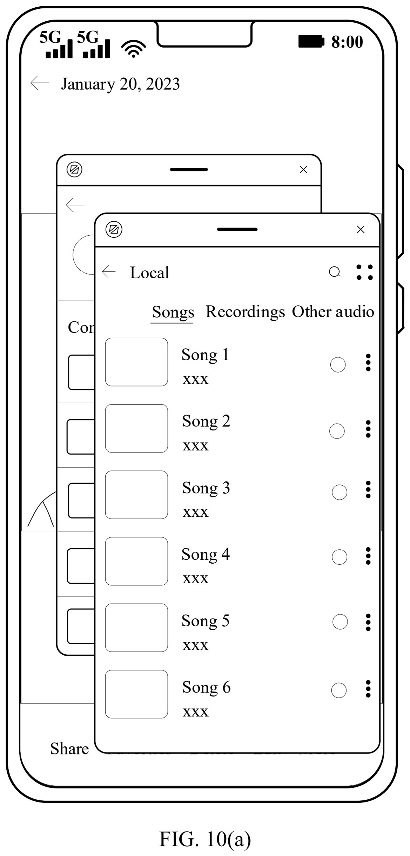

In some embodiments, when the mobile phone in a folded state is unfolded, a floating window floated on an interface of the mobile phone may be displayed on a split screen. For details, refer to GUIs shown in FIG. 9(a) to FIG. 12(e). There is one floating window floated on the interface of the mobile phone in FIG. 9(a) to FIG. 9(d), and there are a plurality of floating windows floated on the interface of the mobile phone in FIG. 10(a) to FIG. 12(e).

FIG. 9(a) to FIG. 9(d) show a group of GUIs of a mobile phone. FIG. 9(a) to FIG. 9(d) show interfaces displayed after a user unfolds the mobile phone in a folded state.

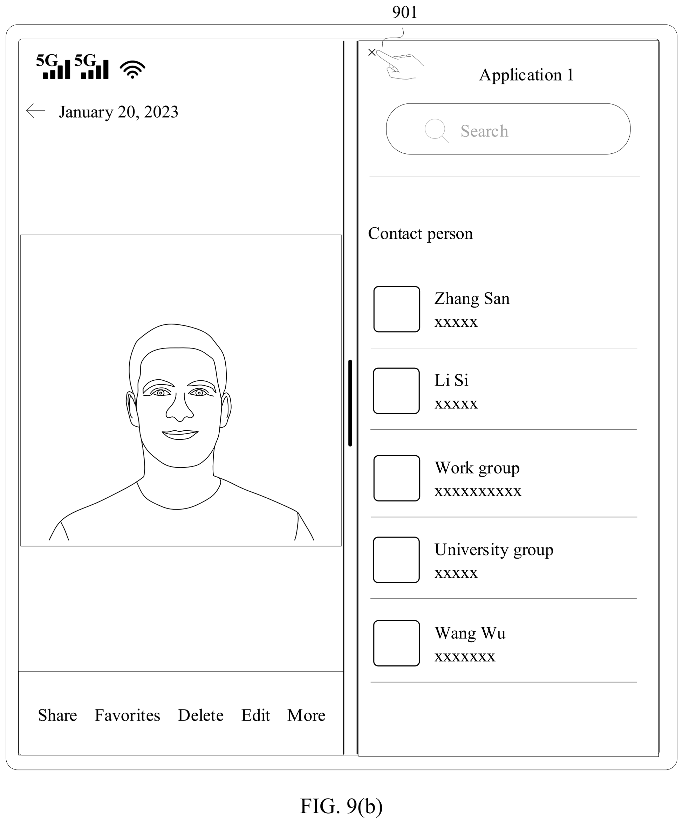

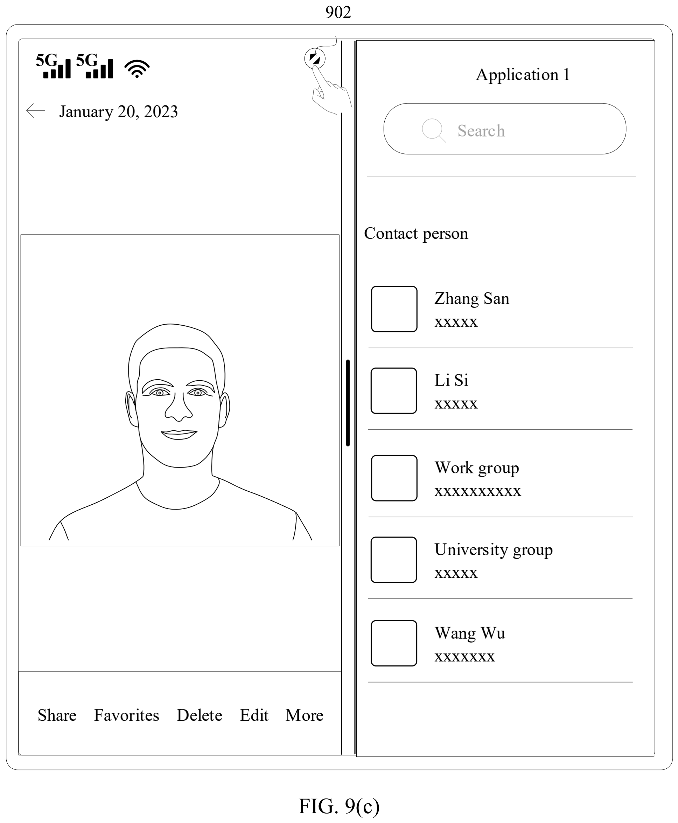

Refer to a GUI shown in FIG. 9(a). In this case, a main interface for an application 1 (the main interface for the application 1 includes a plurality of contact persons, such as Zhang San, Li Si, and Work group) is floated on a picture including a portrait. When detecting that a state of the mobile phone changes from the folded state to an unfolded state, the mobile phone may display a GUI shown in FIG. 9(b) or FIG. 9(c).

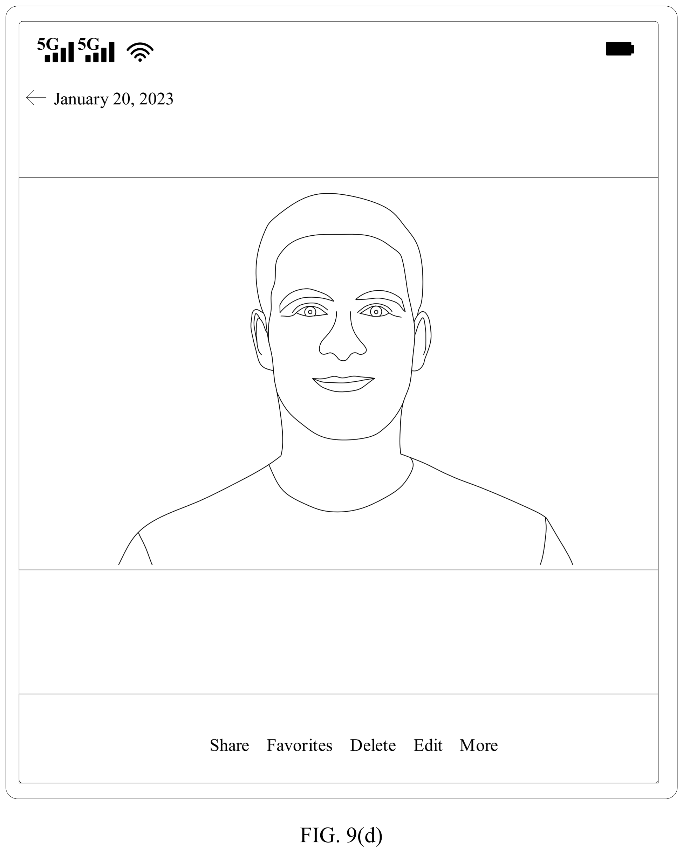

Refer to the GUI shown in FIG. 9(b). It can be learned that in this case, the main interface for the application 1 is used as a temporary task and is displayed on split screens with the picture including the portrait. That is, the main interface for the application 1 is displayed on a right side of a screen, and the picture including the portrait is displayed on a left side of the screen. In addition, a control "×" is displayed at an upper left corner of the main interface for the application 1, and the user may tap the control to close a historical task on a current split screen. After detecting an operation of tapping an icon 901 of the control "×" by the user, the mobile phone may display a GUI shown in FIG. 9(d).

Refer to the GUI shown in FIG. 9(c). It can be learned that in this case, the main interface for the application 1 is used as a temporary task and is displayed on split screens with the picture including the portrait. That is, the main interface for the application 1 is displayed on a right side of a screen, and the picture including the portrait is displayed on a left side of the screen. In addition, a control 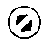 is displayed at an upper right corner of the interface for the picture including the portrait. The user may tap the control to display the picture including the portrait in full screen. After detecting an operation of tapping an icon 902 of the control " 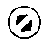 " by the user, the mobile phone may display the GUI shown in FIG. 9(d).

Refer to the GUI shown in FIG. 9(d). In this case, the picture including the portrait is displayed in full screen on the interface.

Certainly, in some possible implementations, no control is displayed on the main interface for the application 1 or the interface for the picture including the portrait. The user may slide inward from a left side or a right side of the mobile phone to close a historical task on a current split screen, that is, display the picture including the portrait in full screen.

According to the solution provided in this embodiment of this application, the interface of the mobile phone in the folded state displays one floating window that is floated on a picture. When the mobile phone is unfolded from the folded state to the unfolded state, the picture and content corresponding to the floating window may be displayed on split screens. This can ensure that user experience is not interrupted when a state of the mobile phone changes, thereby improving user experience. In addition, the user may tap a control to display the picture in full screen, so that user experience can be further improved.

FIG. 10(a) to FIG. 10(f) show a group of GUIs of a mobile phone. FIG. 10(a) to FIG. 10(f) show interfaces displayed after a user unfolds the mobile phone in a folded state. In this application and subsequent embodiments, a control "×" is used as an example for description.

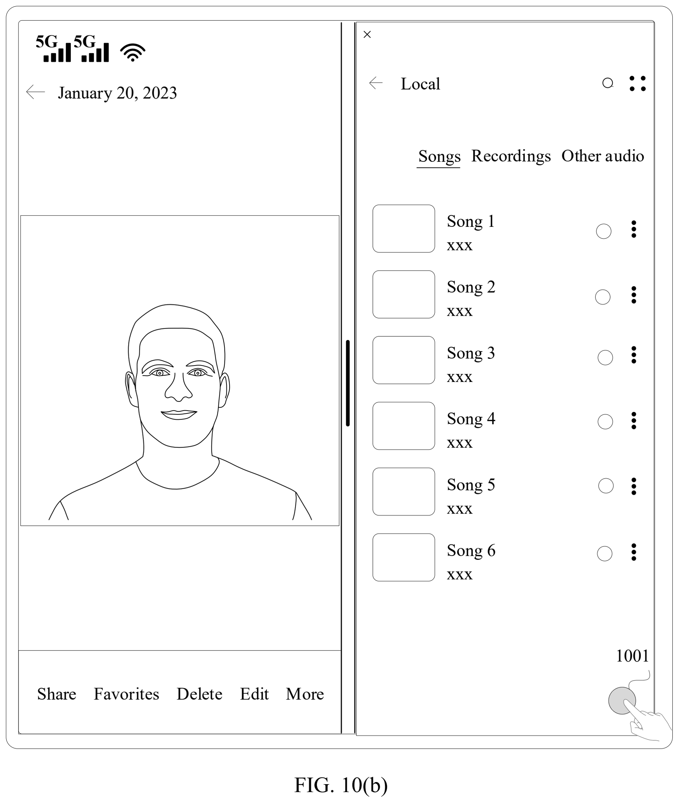

Refer to a GUI shown in FIG. 10(a). In this case, a main interface for an application 1 (the main interface for the application 1 includes a plurality of contact persons, such as Zhang San, Li Si, and Work group) and an audio interface (the audio interface includes Songs, Recordings, and Other audio) are floated on a picture including a portrait. In addition, the audio interface is on the main interface for the application 1. It is assumed that the audio interface is a focused interface (the focused interface may be understood as an interface selected by a user). When detecting that a state of the mobile phone changes from the folded state to an unfolded state, the mobile phone may display a GUI shown in FIG. 10(b).

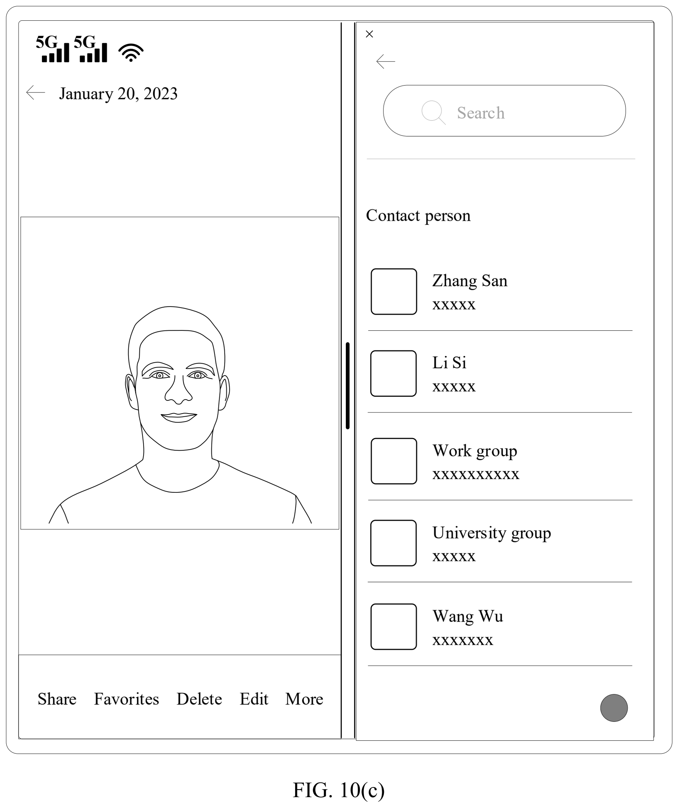

Refer to the GUI shown in FIG. 10(b). It can be learned that in this case, the audio interface is used as a temporary task and is displayed on split screens with the picture including the portrait. That is, the audio interface is displayed on a right side of a screen, and the picture including the portrait is displayed on a left side of the screen. In addition, a floating bubble ∘ is displayed at a lower right corner of the audio interface. The floating bubble ∘ may be a window corresponding to the main interface for the application 1 in a minimized state. The user may tap the floating bubble ∘ to switch to and display an interface of a temporary split screen. After detecting an operation of tapping an icon 1001 of the floating bubble o by the user, the mobile phone may display a GUI shown in FIG. 10(c).

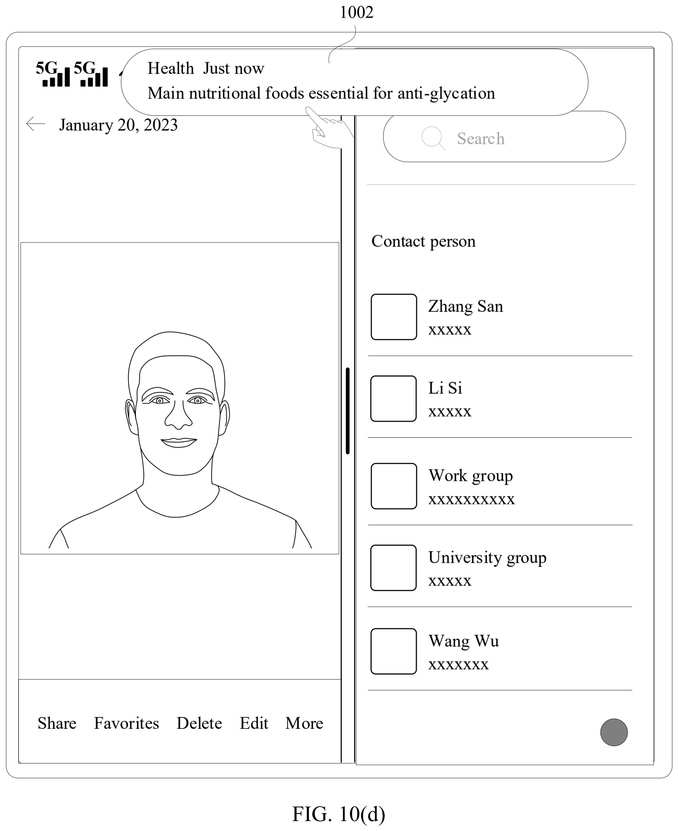

Refer to the GUI shown in FIG. 10(c). In this case, the main interface for the application 1 is used as a temporary task and is displayed on split screens with the picture including the portrait. That is, the main interface for the application 1 is displayed on a right side of a screen, and the picture including the portrait is displayed on a left side of the screen. In addition, a floating bubble o is displayed at a lower right corner of the main interface for the application 1, and the floating bubble ∘ may be a window corresponding to the audio interface in a minimized state. In some cases, some applications may further display notification messages in a pop-up box. Assuming that a notification message is displayed in a pop-up box of an application Health, a GUI shown in FIG. 10(d) may be displayed.

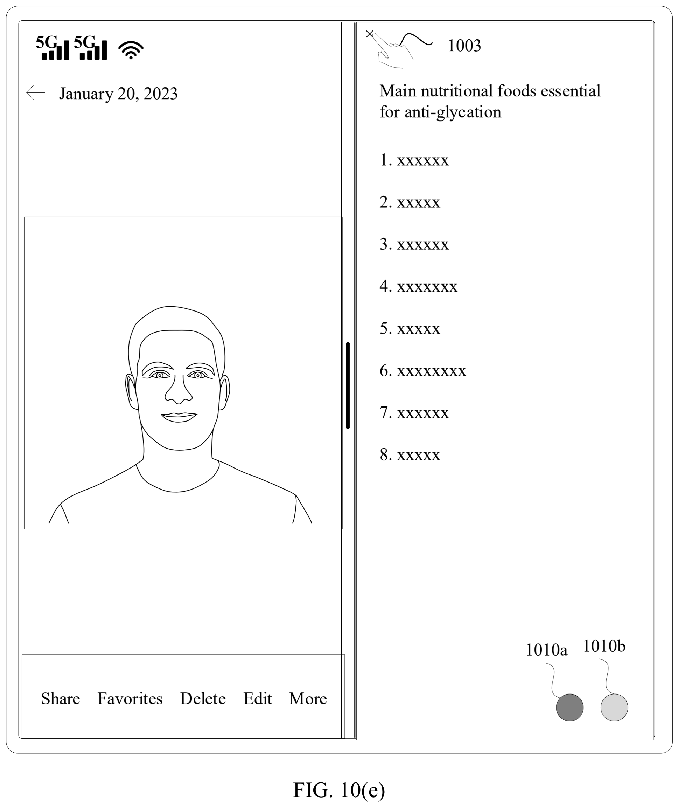

Refer to the GUI shown in FIG. 10(d). It can be learned that in this case, the message displayed in the pop-up box of the application Health is displayed on the top of an interface, and a theme of the message is "Main nutritional foods to avoid for anti-glycation". The user may tap the pop-up box to view more details. After detecting an operation of tapping a pop-up box 1002 by the user, the mobile phone may display a GUI shown in FIG. 10(e).

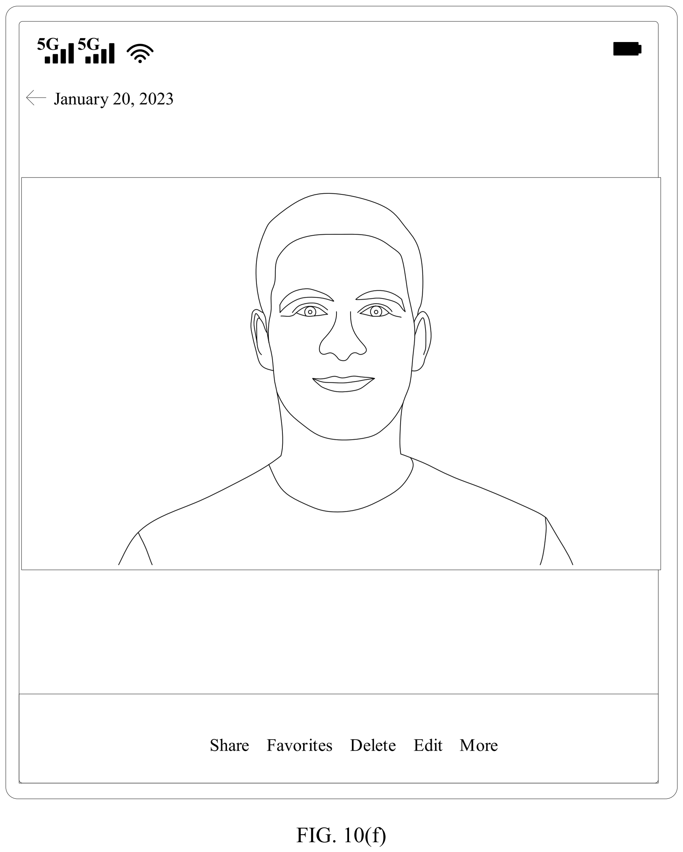

Refer to the GUI shown in FIG. 10(e). It can be learned that in this case, a health interface with the theme of "Main nutritional foods to avoid for anti-glycation" is displayed as a temporary task on a right side of the screen. The window of the main interface for the application 1 is automatically switched to a minimized state. In this case, a lower right corner of the health interface with the theme of "Main nutritional foods to avoid for anti-glycation" includes two floating bubbles. A floating bubble 1010a may be a window corresponding to the audio interface in the minimized state, and a floating bubble 1010b may be a window corresponding to the main interface for the application 1 in the minimized state. In addition, a control "×" is displayed at an upper left corner of the health interface with the theme of "Main nutritional foods to avoid for anti-glycation". The user may tap the control to close a historical task on a current split screen. After detecting an operation of tapping the control "×" 1003 by the user, the mobile phone may display a GUI shown in FIG. 10(f), or display the GUI shown in FIG. 10(d).

Refer to the GUI shown in FIG. 10(f). In this case, the picture including the portrait is displayed in full screen on the interface.

According to the solution provided in this embodiment of this application, when the user shares a picture across applications, the picture and an interface for an application to which the picture is to be shared may be displayed on split screens. In this way, a problem of user experience interruption during cross-application redirection can be resolved, thereby improving user experience. In addition, the user may tap a control to display the picture in full screen, so that user experience can be further improved.

According to the solution provided in this embodiment of this application, an interface of the mobile phone in the folded state displays a plurality of floating windows that are floated on a picture. When the mobile phone is unfolded from the folded state to the unfolded state, the picture and content corresponding to a floating window, for example, a focused floating window (which may be understood as a floating window selected by the user), may be displayed on split screens. This can ensure that user experience is not interrupted when a state of the mobile phone changes, thereby improving user experience. In addition, the user may tap a control to display the picture in full screen, or close a current temporary split screen and display content of another floating window, so that user experience can be further improved.

In some possible implementations, when the mobile phone is in the folded state, a plurality of floating windows are floated on a picture. When the mobile phone detects that a state of the mobile phone changes from the folded state to the unfolded state, the plurality of floating windows and the picture may be displayed on the interface in a split-screen manner. This is not limited. It may be understood that, in this case, a size of each split screen is less than a size of the split screen shown in FIG. 10(b).

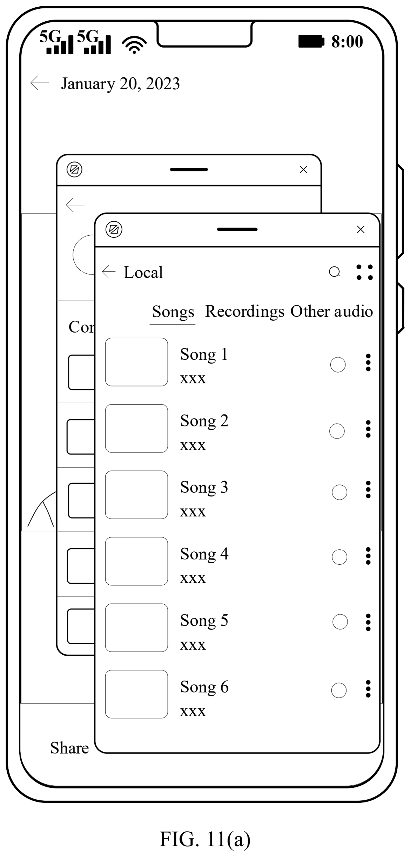

FIG. 11(a) to FIG. 11(f) show a group of GUIs of a mobile phone. FIG. 11(a) to FIG. 11(f) show interfaces displayed after a user unfolds the mobile phone in a folded state.

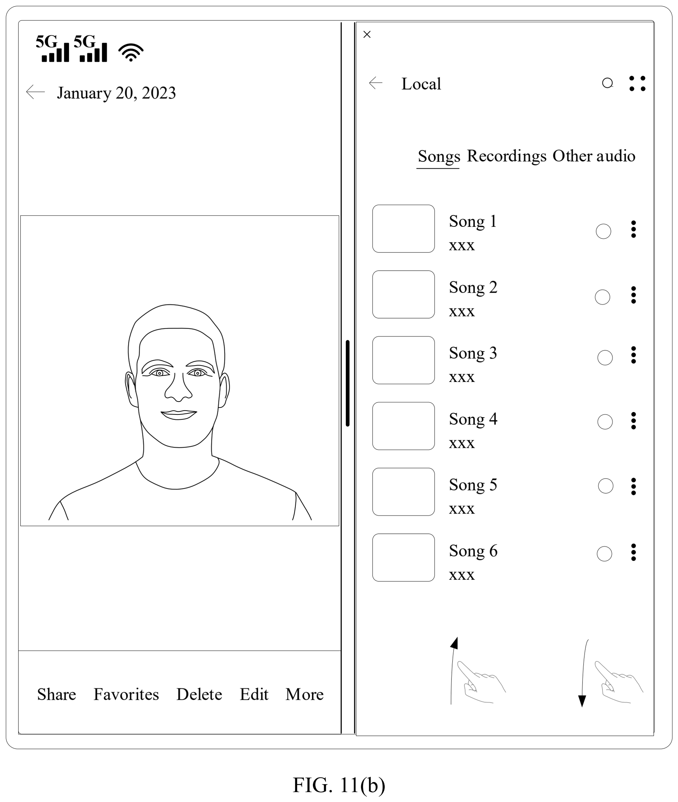

Refer to a GUI shown in FIG. 11(a). In this case, a main interface for an application 1 (the main interface for the application 1 includes a plurality of contact persons, such as Zhang San, Li Si, and Work group) and an audio interface (the audio interface includes Songs, Recordings, and Other audio) are floated on a picture including a portrait. In addition, the audio interface is on the main interface for the application 1. It is assumed that the audio interface is a focused interface. When detecting that a state of the mobile phone changes from the folded state to an unfolded state, the mobile phone may display a GUI shown in FIG. 11(b).

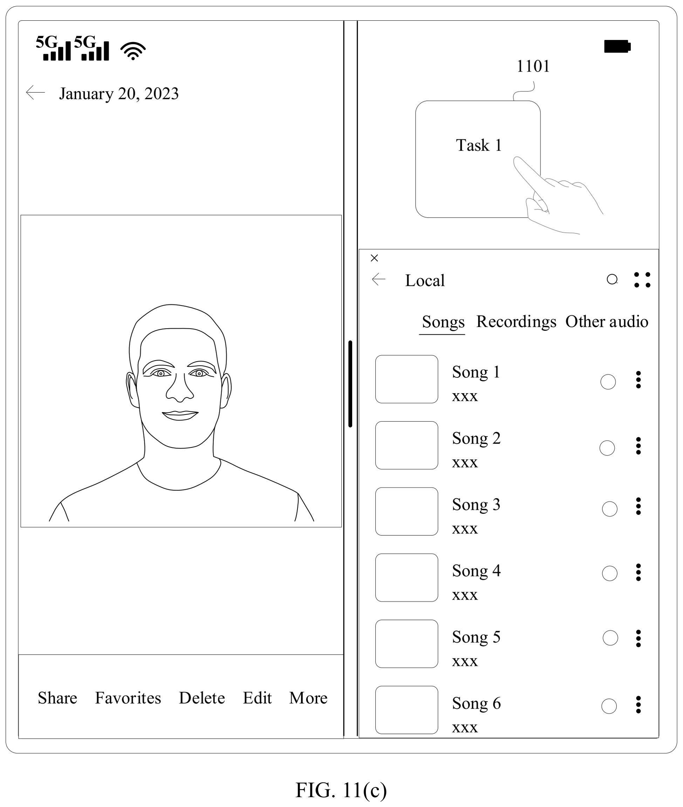

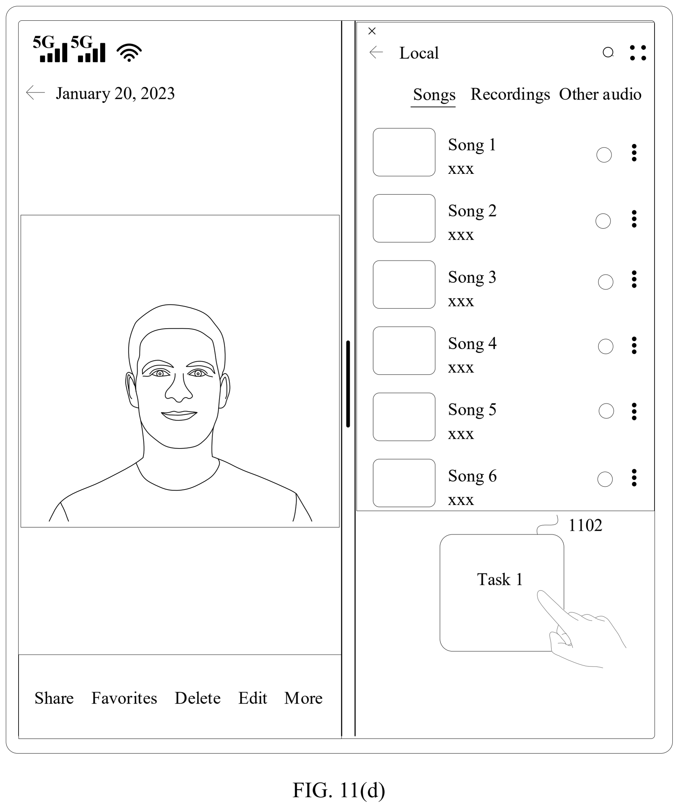

Refer to the GUI shown in FIG. 11(b). It can be learned that in this case, the audio interface is used as a temporary task and is displayed on split screens with the picture including the portrait. That is, the audio interface is displayed on a right side of a screen, and the picture including the portrait is displayed on a left side of the screen. The user may display, on the screen through some operations, a window that is not displayed on the screen. For example, when detecting that the user slides downward in a direction shown in the figure, the mobile phone may display a GUI shown in any one of FIG. 11(c) to FIG. 11(e). When detecting that the user slides upward according to a direction shown in the figure, the mobile phone may display a GUI shown in FIG. 11(d).

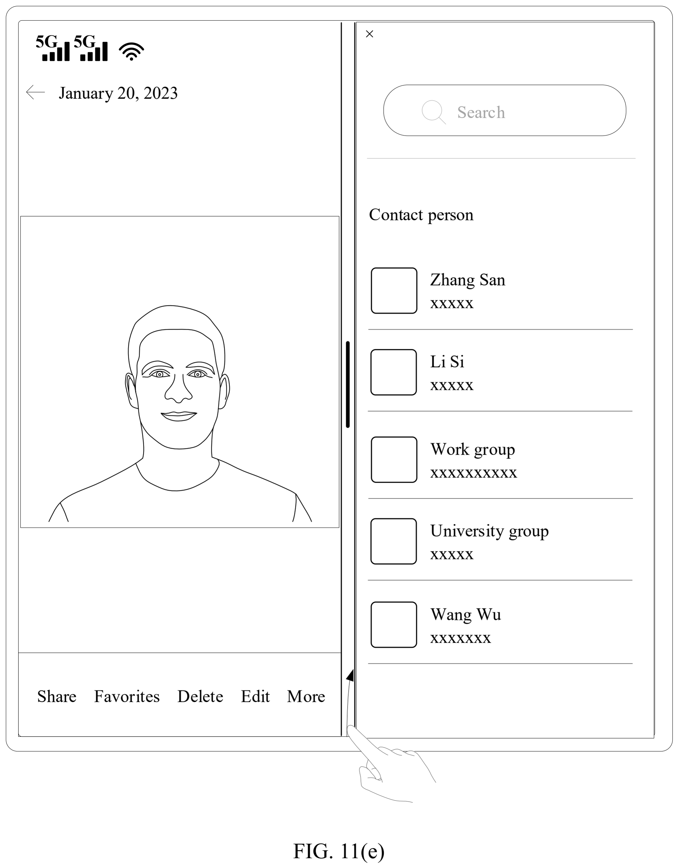

Refer to the GUI shown in FIG. 11(c). In this case, a size of the audio interface is reduced, and more tasks are displayed above the audio interface (a task 1 is displayed in the figure, and the task 1 may correspond to the main interface for the application 1 shown in FIG. 11(a)). The user may tap an icon of the task to switch to and display the temporary task. After detecting an operation of tapping an icon 1101 of the task 1 by the user, the mobile phone may display the GUI shown in FIG. 11(e).

Refer to the GUI shown in FIG. 11(d). In this case, a size of the audio interface is reduced, and more tasks are displayed below the audio interface (a task 1 is displayed in the figure, and the task 1 may correspond to the main interface for the application 1 shown in FIG. 11(a)). The user may tap an icon of the task to switch to and display the temporary task. After detecting an operation of tapping an icon 1102 of the task 1 by the user, the mobile phone may display the GUI shown in FIG. 11(e).

Refer to the GUI shown in FIG. 11(e). It can be learned that in this case, the main interface for the application 1 is used as a temporary task and is displayed on split screens with the picture including the portrait. That is, the main interface for the application 1 is displayed on the right side of the screen, and the picture including the portrait is displayed on the left side of the screen.

For displaying the picture including the portrait in full screen, refer to the content of FIG. 9(a) to FIG. 9(d) or FIG. 10(a) to FIG. 10(f). Details are not described again.

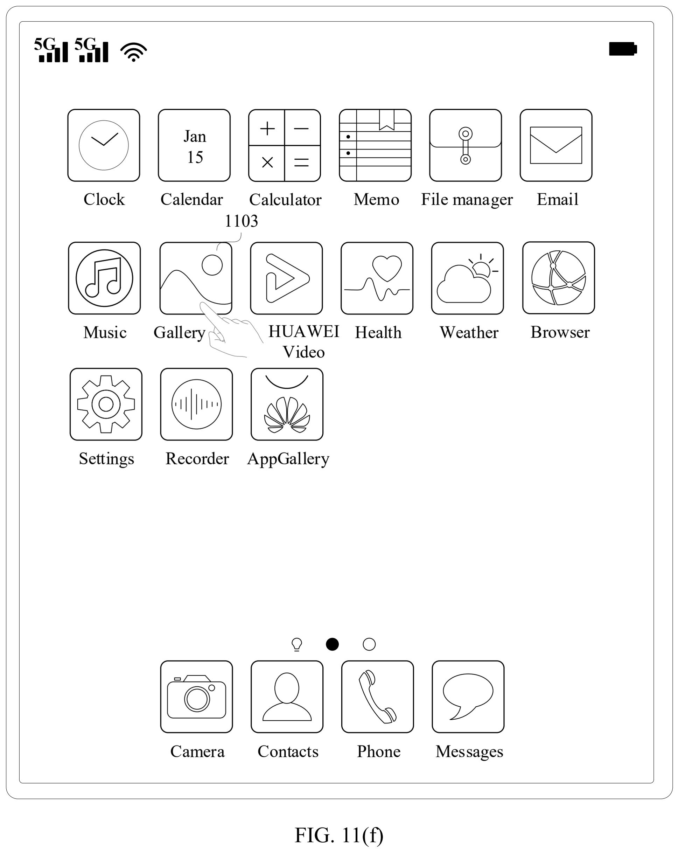

In some possible implementations, the user may further return to a home screen of the mobile phone through some operations. For example, the user may return to the home screen of the mobile phone through an operation such as sliding upward. When detecting that the user slides upward in a direction shown in FIG. 11(e), the mobile phone may display the GUI shown in FIG. 11(f).

It should be noted that in both FIG. 11(b) and FIG. 11(e), there is an action of the user sliding up with a finger, but there is a difference between such two actions. In the GUI shown in FIG. 11(b), the user may slide upward within a specific width range (the specific range may be all or a part of a split screen area) on left and right split screen areas with the finger, so that another task can be displayed. In the GUI shown in FIG. 11(e), the user may slide upward in a middle area (for example, an area between the left and right split screens) with the finger, to either return to the home screen or exit an entire split-screen task together.

Refer to the GUI shown in FIG. 11(f). The home screen of the mobile phone is displayed on an interface. After detecting an operation of tapping an icon 1103 of Gallery on the home screen by the user, the mobile phone may return to and display the GUI shown in FIG. 11(e).

According to the solution provided in this embodiment of this application, an interface of the mobile phone in the folded state displays a plurality of floating windows that are floated on a picture. When the mobile phone is unfolded from the folded state to the unfolded state, the picture and content corresponding to a floating window, for example, a focused floating window, may be displayed on split screens. This can ensure that user experience is not interrupted when a state of the mobile phone changes, thereby improving user experience. In addition, the user may further switch display of a temporary split screen through some operations, thereby further improving user experience.

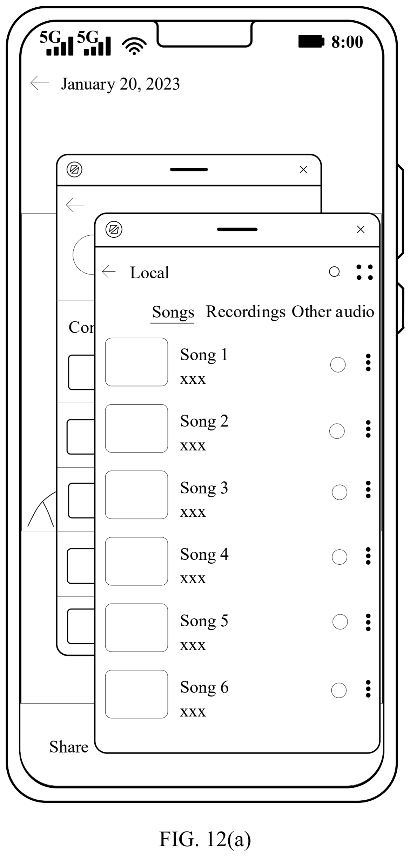

FIG. 12(a) to FIG. 12(e) show a group of GUIs of a mobile phone. FIG. 12(a) to FIG. 12(e) show interfaces displayed after a user unfolds the mobile phone in a folded state.

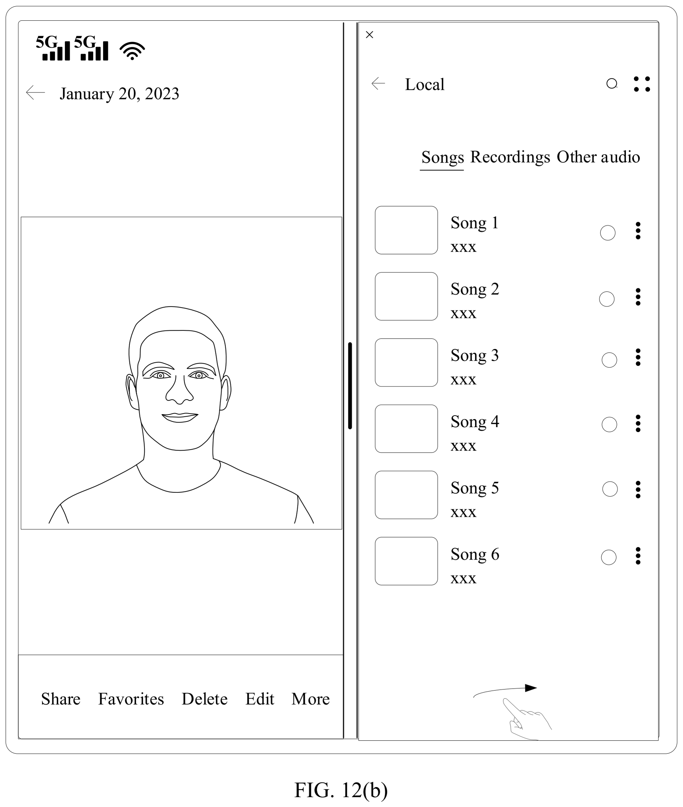

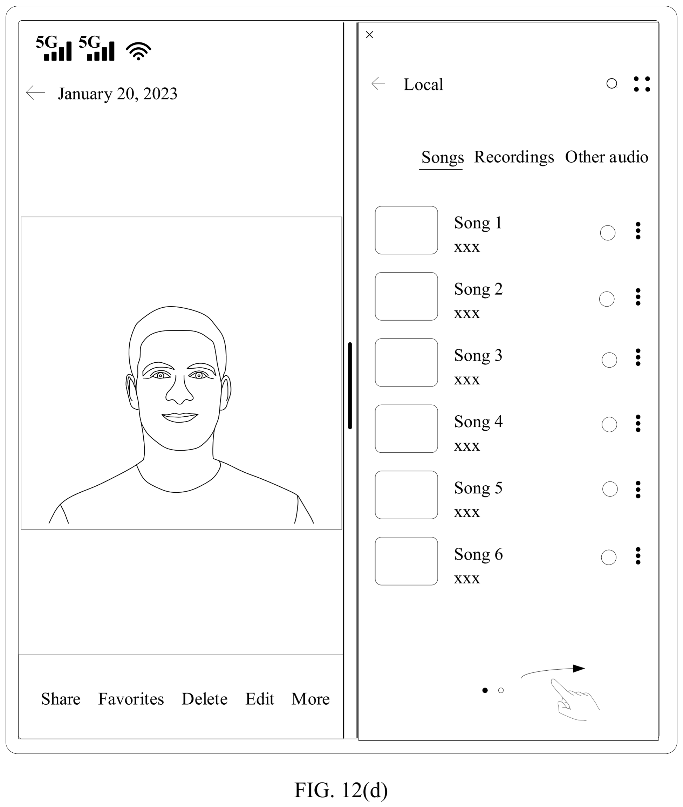

Refer to a GUI shown in FIG. 12(a). In this case, a main interface for an application 1 (the main interface for the application 1 includes a plurality of contact persons, such as Zhang San, Li Si, and Work group) and an audio interface (the audio interface includes Songs, Recordings, and Other audio) are floated on a picture including a portrait. In addition, the audio interface is on the main interface for the application 1. It is assumed that the audio interface is a focused interface. When detecting that a state of the mobile phone changes from the folded state to an unfolded state, the mobile phone may display a GUI shown in FIG. 12(b) or FIG. 12(d).

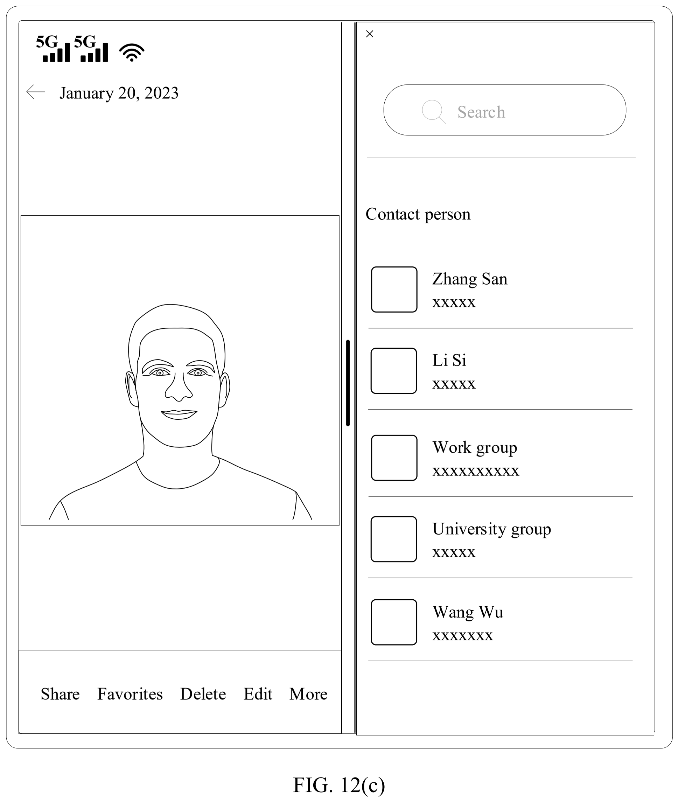

Refer to the GUI shown in FIG. 12(b). It can be learned that in this case, the audio interface is used as a temporary task and is displayed on split screens with the picture including the portrait. That is, the audio interface is displayed on a right side of a screen, and the picture including the portrait is displayed on a left side of the screen. The user may switch display of the temporary task through some operations. For example, when detecting that the user slides according to a direction shown in the figure, the mobile phone may display a GUI shown in FIG. 12(c).

Refer to the GUI shown in FIG. 12(c). In this case, the main interface for the application 1 is used as a temporary task and is displayed on split screens with the picture including the portrait. That is, the main interface for the application 1 is displayed on the right side of the screen, and the picture including the portrait is displayed on the left side of the screen.

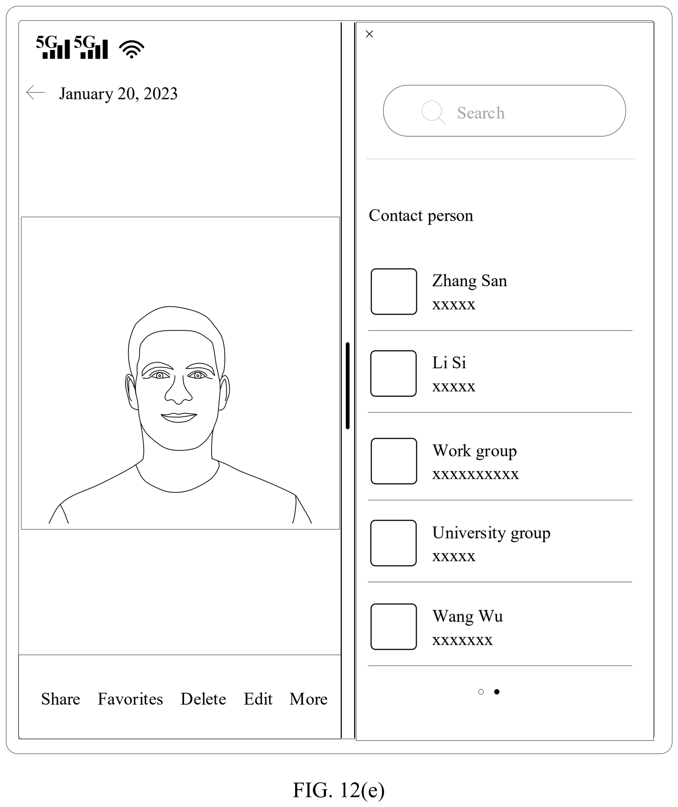

Refer to the GUI shown in FIG. 12(d). It can be learned that in this case, the audio interface is used as a temporary task and is displayed on split screens with the picture including the portrait. That is, the audio interface is displayed on the right side of the screen, and the picture including the portrait is displayed on the left side of the screen. In addition, two dots are displayed in a lower part of the audio interface, and the user may switch display of the temporary task through a sliding operation. A quantity of the dots is related to a quantity of floating windows in FIG. 12(a). If the quantity of the floating windows in FIG. 12(a) is 2, the quantity of the dots is 2. If the quantity of the floating windows in FIG. 12(a) is 4, the quantity of the dots is 4. When detecting that the user slides according to a direction shown in the figure, the mobile phone may display a GUI shown in FIG. 12(e).

Refer to the GUI shown in FIG. 12(e). In this case, the main interface for the application 1 is used as a temporary task and is displayed on split screens with the picture including the portrait. That is, the main interface for the application 1 is displayed on the right side of the screen, and the picture including the portrait is displayed on the left side of the screen.

For displaying the picture including the portrait in full screen, refer to the content of FIG. 9(a) to FIG. 9(d) or FIG. 10(a) to FIG. 10(f). Details are not described again.

According to the solution provided in this embodiment of this application, an interface of the mobile phone in the folded state displays a plurality of floating windows that are floated on a picture. When the mobile phone is unfolded from the folded state to the unfolded state, the picture and content corresponding to a floating window, for example, a focused floating window, may be displayed on split screens. This can ensure that user experience is not interrupted when a state of the mobile phone changes, thereby improving user experience. In addition, the user may further switch display of a temporary split screen through some operations, thereby further improving user experience.

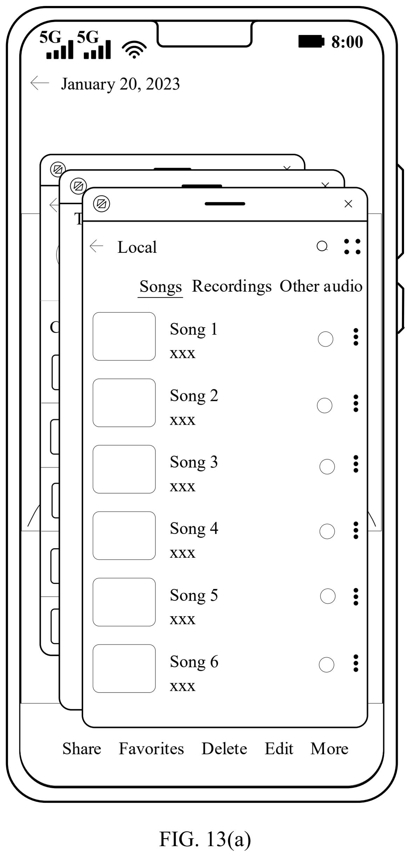

FIG. 13(a) to FIG. 13(k) show a group of GUIs of a mobile phone. FIG. 13(a) to FIG. 13(k) show interfaces displayed after a user unfolds the mobile phone in a folded state.

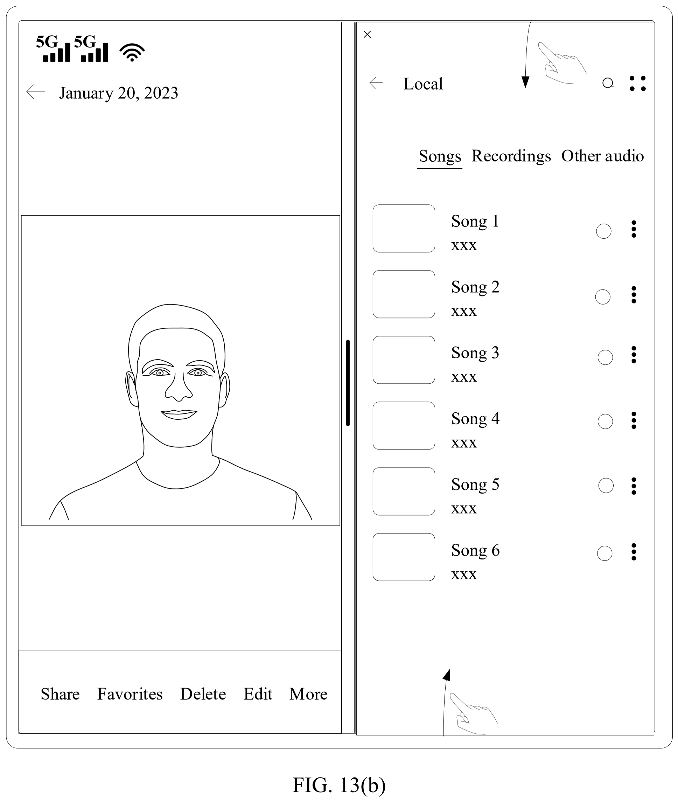

Refer to a GUI shown in FIG. 13(a). In this case, a main interface for an application 1 (the main interface for the application 1 includes a plurality of contact persons, such as Zhang San, Li Si, and Work group), a calendar interface, and an audio interface (the audio interface includes Songs, Recordings, and Other audio) are floated on a picture including a portrait. In addition, the audio interface is on the calendar interface, and the calendar interface is on the main interface for the application 1. It is assumed that the audio interface is a focused interface. When detecting that a state of the mobile phone changes from the folded state to an unfolded state, the mobile phone may display a GUI shown in FIG. 13(b).

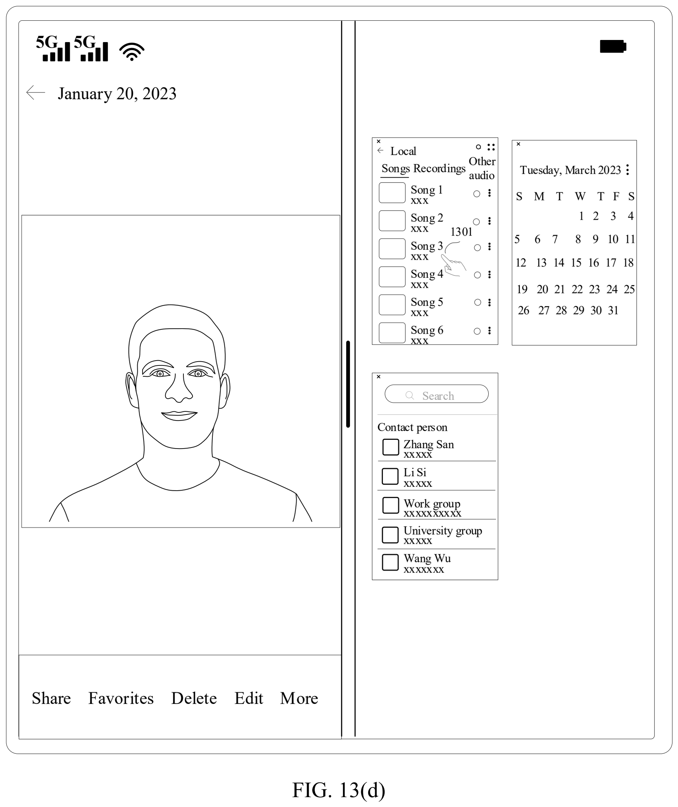

Refer to the GUI shown in FIG. 13(b). It can be learned that in this case, the audio interface is used as a temporary task and is displayed on split screens with the picture including the portrait. That is, the audio interface is displayed on a right side of a screen, and the picture including the portrait is displayed on a left side of the screen. The user may display all temporary tasks on the right side of the screen through some operations. For example, when detecting that the user slides according to a direction shown in the figure (it should be noted that in this case, the user may slide upward or downward from an edge of the screen) with a single finger, the mobile phone may display any one of GUIs shown in FIG. 13(d) to FIG. 13(f).

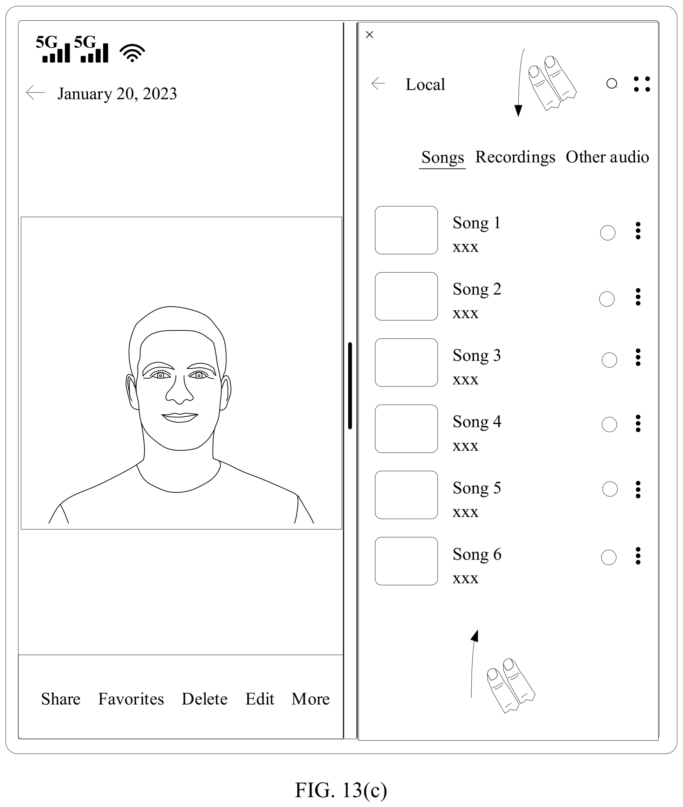

In some possible implementations, a plurality of fingers of the user may also slide on an interface (it should be noted that, in this case, the plurality of fingers of the user may slide upward or downward in any area in a split screen area). For example, in a GUI shown in FIG. 13(c), when detecting that the plurality of fingers of the user slide according to a direction shown in the figure (two fingers are displayed in the figure), the mobile phone may display any one of the GUIs shown in FIG. 13(d) to FIG. 13(f).

Refer to the GUI shown in FIG. 13(d). It can be learned that in this case, the audio interface, the calendar interface, and the main interface for the application 1 are used as temporary tasks and are displayed on split screens with the picture including the portrait. In addition, the audio interface, the calendar interface, and the main interface for the application 1 are all displayed on the right side of the screen, and the picture including the portrait is displayed on the left side of the screen.

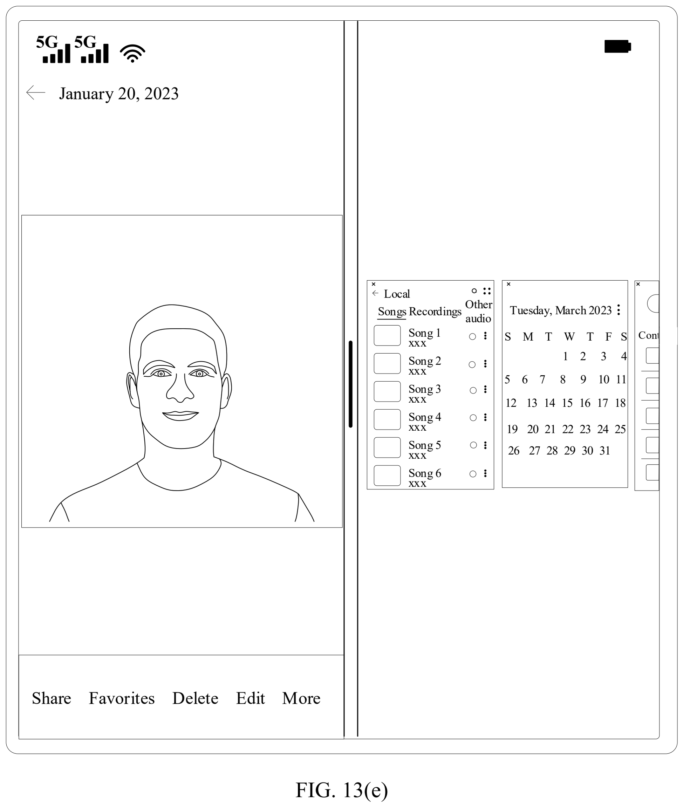

Refer to the GUI shown in FIG. 13(e). It can be learned that in this case, the audio interface, the calendar interface, and a part of the main interface for the application 1 are used as temporary tasks and are displayed on split screens with the picture including the portrait. In addition, the audio interface, the calendar interface, and a part of the main interface for the application 1 are all displayed on the right side of the screen, and the picture including the portrait is displayed on the left side of the screen.

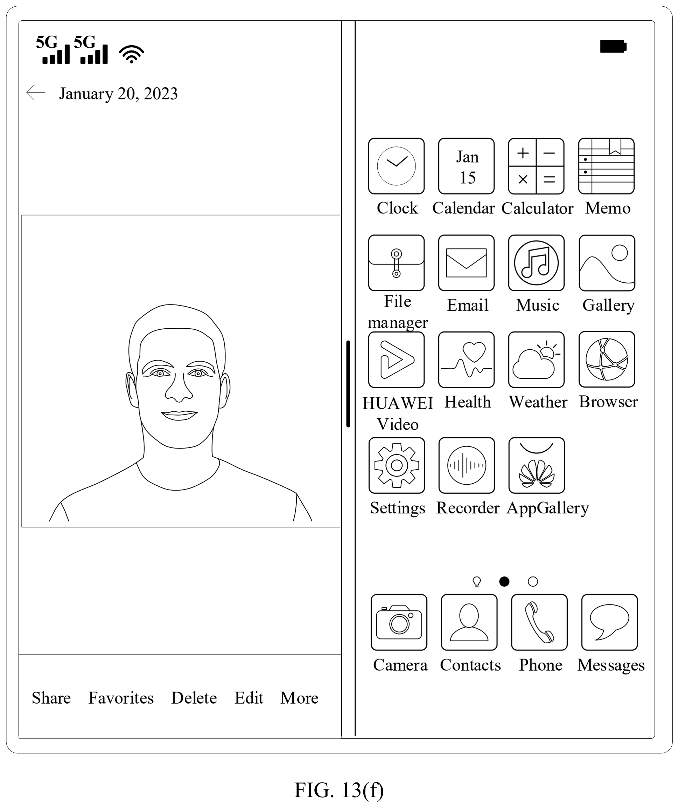

Refer to a GUI shown in FIG. 13(f). It can be learned that in this case, the picture including the portrait and a home screen of the mobile phone are displayed on split screens. In addition, the picture including the portrait is displayed on the left side of the screen, and the home screen of the mobile phone is displayed on the right side of the screen.

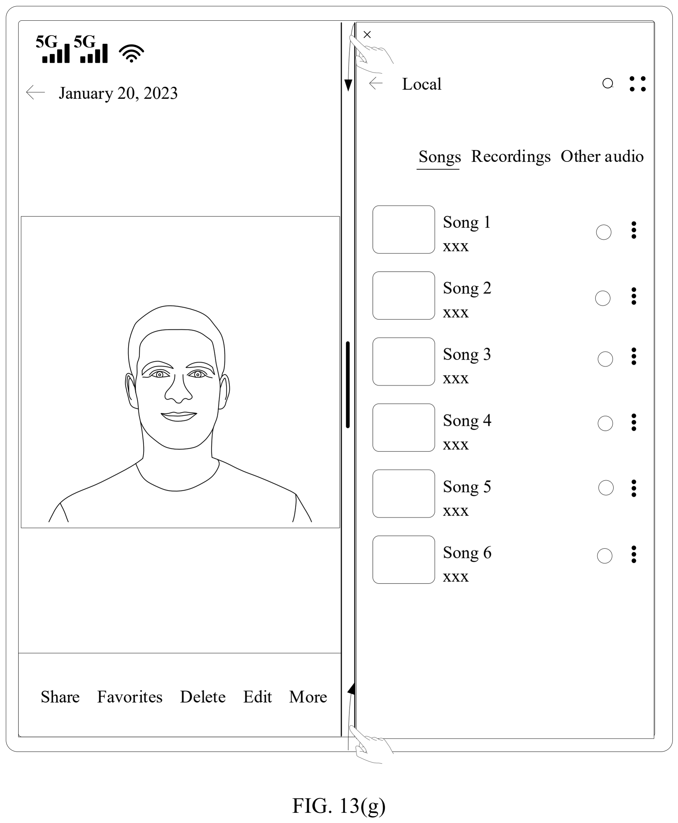

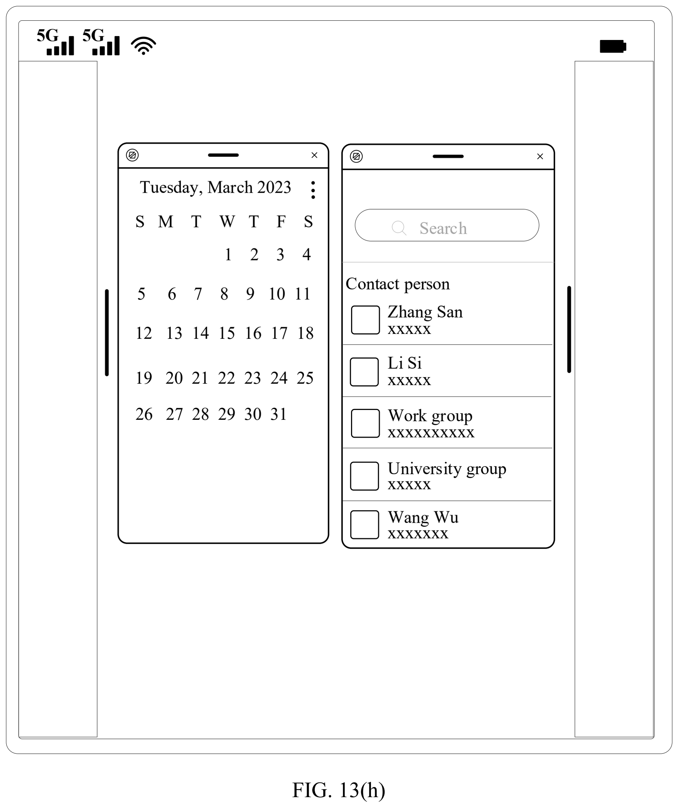

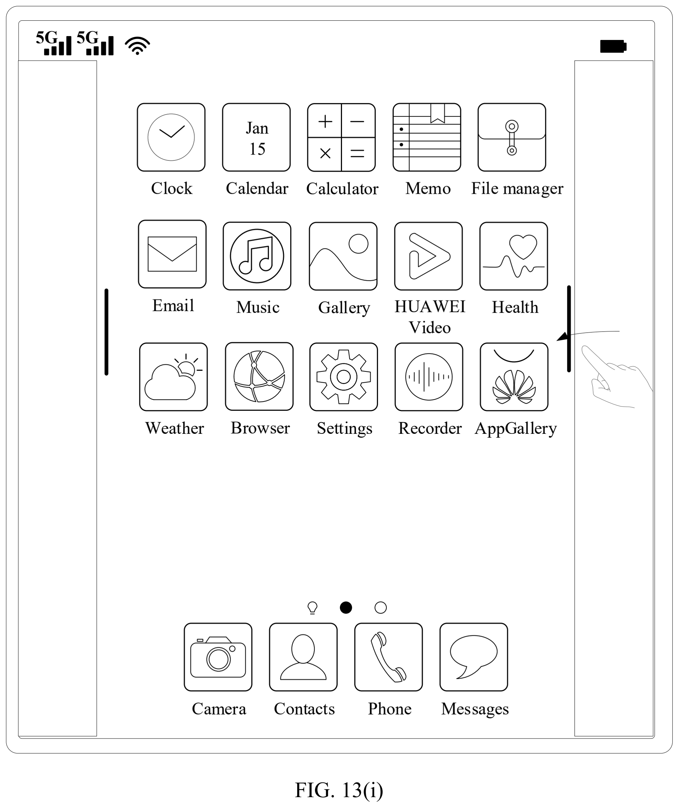

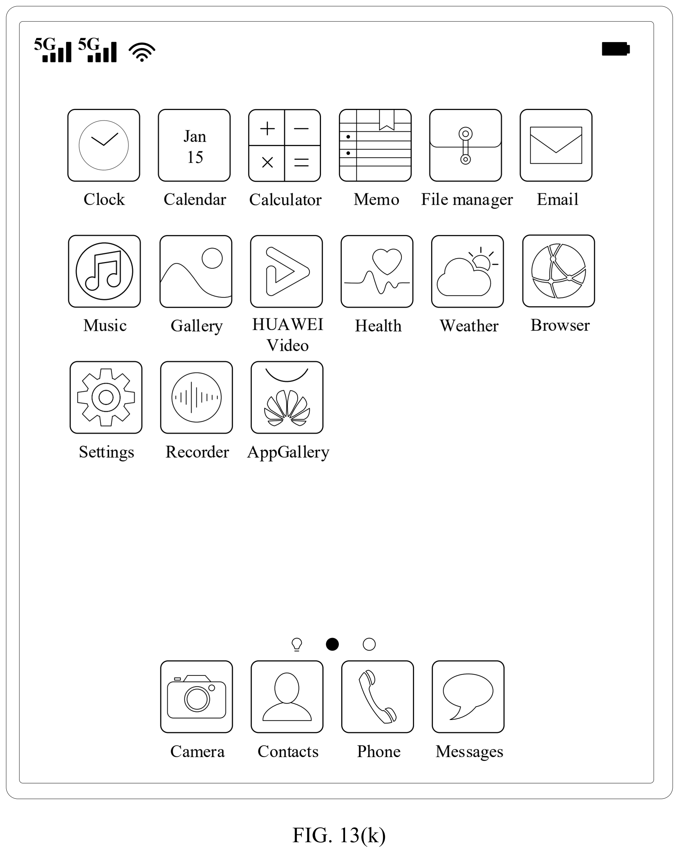

Refer to the GUI shown in FIG. 13(d) or FIG. 13(e). The user may tap any interface. FIG. 13(d) is used as an example. When detecting an operation of tapping an icon 1301 of the audio interface in the figure, the mobile phone may display a GUI shown in FIG. 13(g). When detecting that the user slides downward in a middle area (for example, an area between left and right screens) according to a direction shown in the figure, the mobile phone may display a GUI shown in FIG. 13(h) or FIG. 13(i). When detecting that the user slides upward in a middle area (for example, an area between left and right screens) according to a direction shown in the figure, the mobile phone may display a GUI shown in FIG. 13(k).

Refer to the GUI shown in FIG. 13(h). It can be learned that in this case, the calendar interface and the interface for the application 1 are floated on the home screen of the mobile phone, and some content of other interfaces is displayed on left and right sides of the mobile phone. A rectangular box on a left side of Calendar shown in the figure may be understood as a part of an interface for the picture, and a rectangular box on a right side of the application 1 shown in the figure may be understood as a part of an interface for Audio.

Refer to the GUI shown in FIG. 13(i). It can be learned that in this case, the home screen of the mobile phone is displayed in a middle part of the interface of the mobile phone, and some content of other interfaces is displayed on the left and right sides of the mobile phone. A rectangular box on a left side in the figure may be understood as a part of the interface for the picture, and a rectangular box on a right side in the figure may be understood as a part of the interface for Audio.

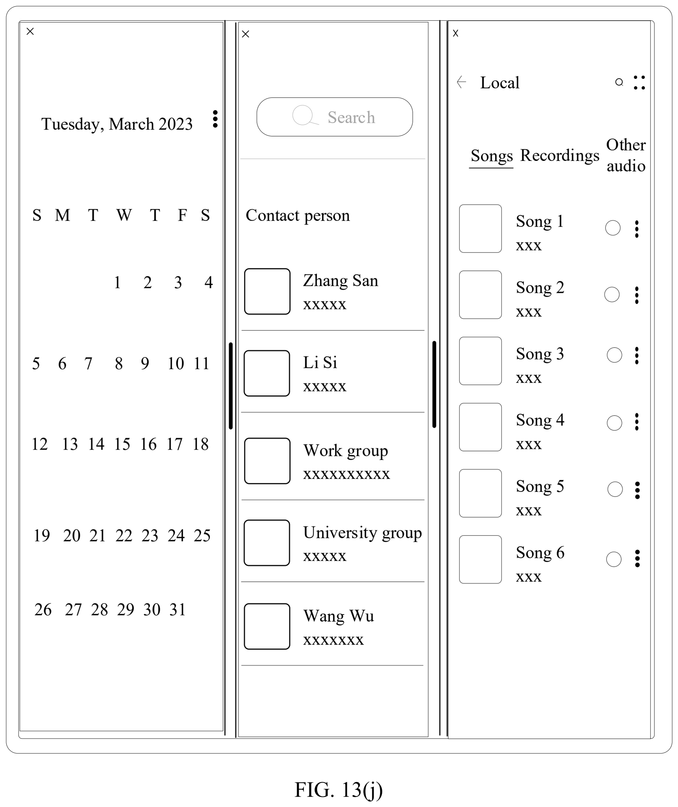

Based on GUIs shown in FIG. 13(h) and FIG. 13(i), when detecting that the user slides leftward according to a direction shown in the figure, the mobile phone may display a GUI shown in FIG. 13(j).

Refer to the GUI shown in FIG. 13(j). It can be learned that in this case, the interface of the mobile phone is displayed in three split screens, including the calendar interface, the interface for the application 1, and the audio interface.

Refer to the GUI shown in FIG. 13(k). The home screen of the mobile phone is displayed on the interface.

According to the solution provided in this embodiment of this application, the interface of the mobile phone in the folded state displays a plurality of floating windows that are floated on a picture. When the mobile phone is unfolded from the folded state to the unfolded state, the picture and content corresponding to a floating window, for example, a focused floating window, may be displayed on split screens. This can ensure that user experience is not interrupted when a state of the mobile phone changes, thereby improving user experience. In addition, the user may further perform some operations to enable all temporary tasks to be displayed on the right side of the screen, and switch display of a temporary split screen on this basis, thereby further improving user experience.

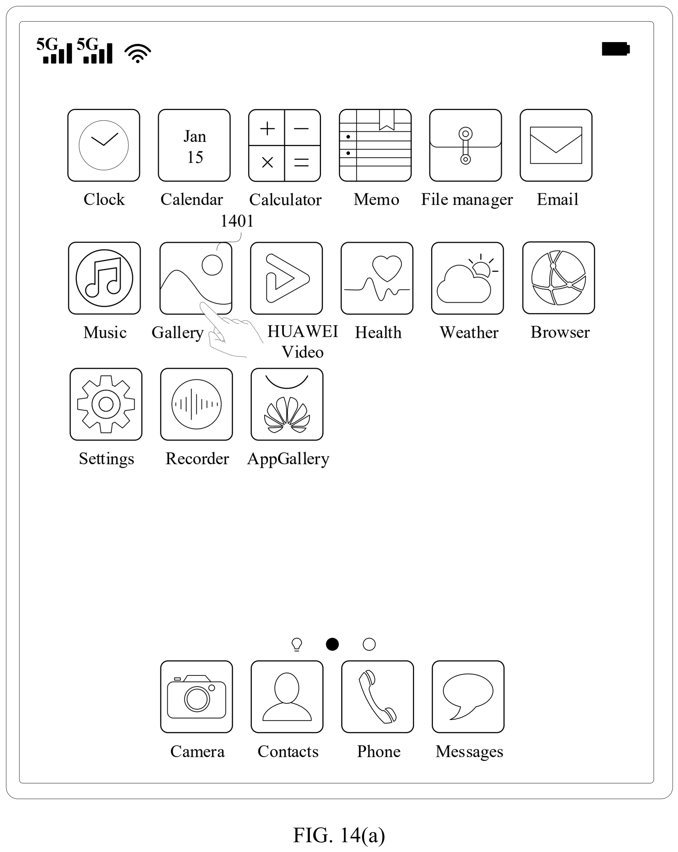

In some embodiments, if full-screen content or a floating window is displayed on a current interface, content opened through some other entries may be displayed in a floating window or displayed on a temporary split screen. For details, refer to GUIs shown in FIG. 14(a) to FIG. 15(d).

FIG. 14(a) to FIG. 14(g) show a group of GUIs of a mobile phone. FIG. 14(a) to FIG. 14(g) show interfaces displayed after a user opens content through a sidebar when content is displayed in full screen on a current interface.

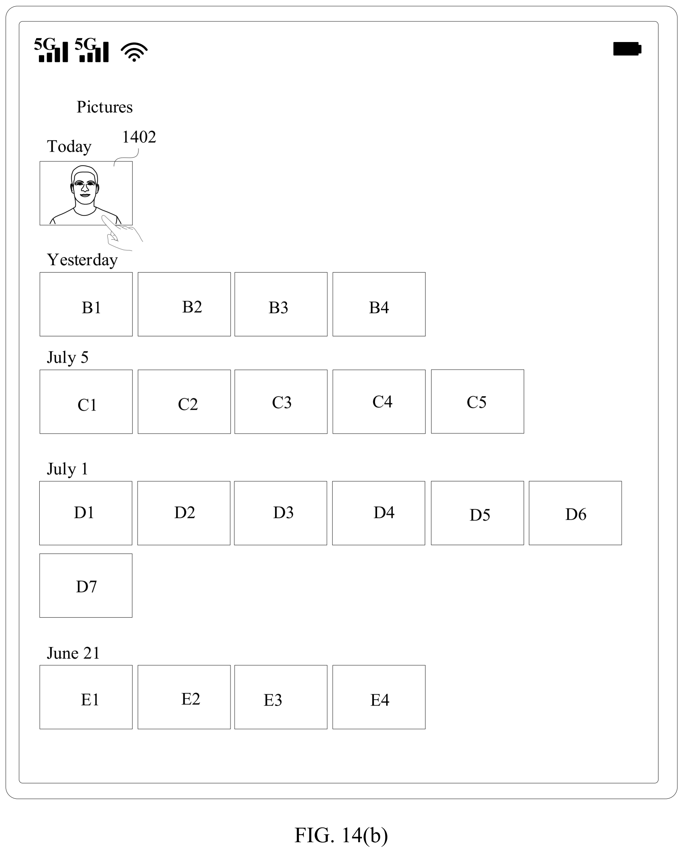

Refer to a GUI shown in FIG. 14(a). The GUI is a home screen of the mobile phone. After detecting an operation of tapping an icon 1401 of Gallery on the home screen by the user, the mobile phone may start Gallery, and display a GUI shown in FIG. 14(b).

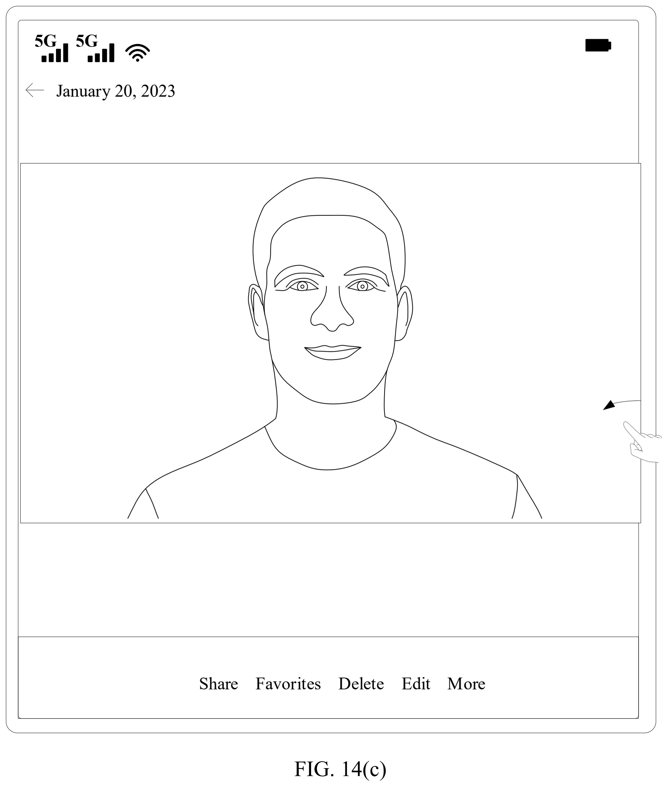

Refer to the GUI shown in FIG. 14(b). Pictures in Gallery are displayed on the interface. After detecting an operation of tapping, by the user, a picture 1402 including a portrait, the mobile phone may display a GUI shown in FIG. 14(c).

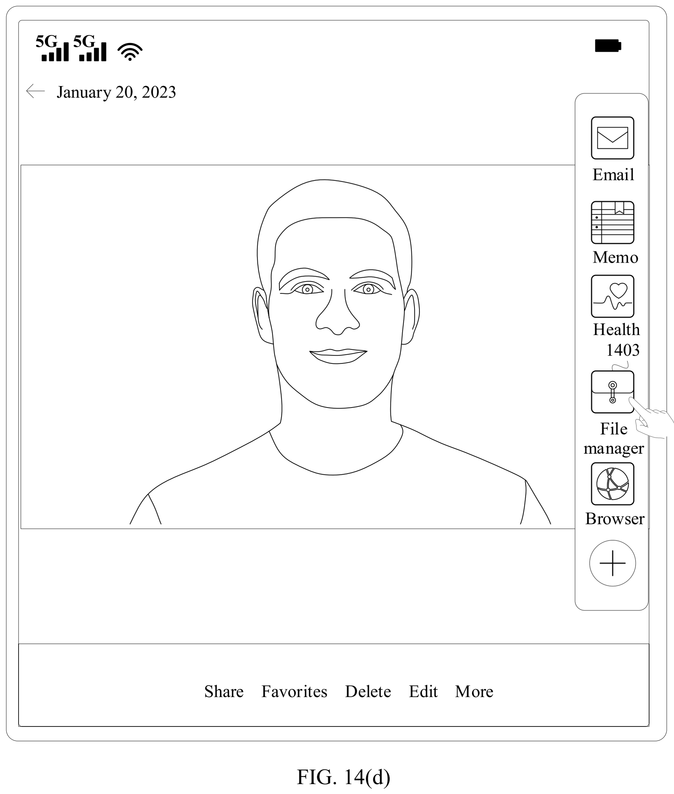

Refer to the GUI shown in FIG. 14(c). The picture including the portrait is displayed on the interface, along with a bar frame displayed at the bottom of the interface. The bar frame includes function buttons such as Share, Favorites, Delete, Edit, and More. When detecting that the user opens the sidebar according to a direction shown in the figure, the mobile phone may display a GUI shown in FIG. 14(d).

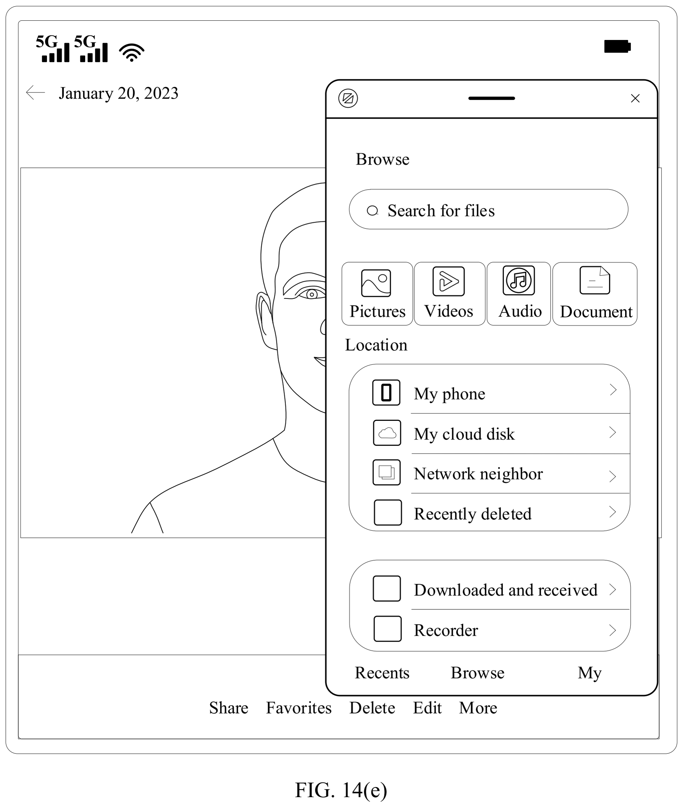

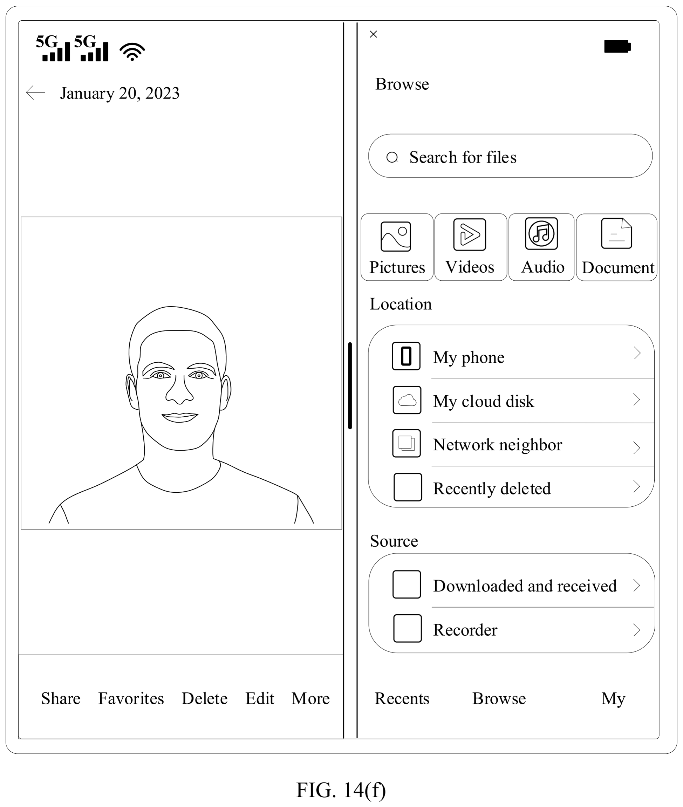

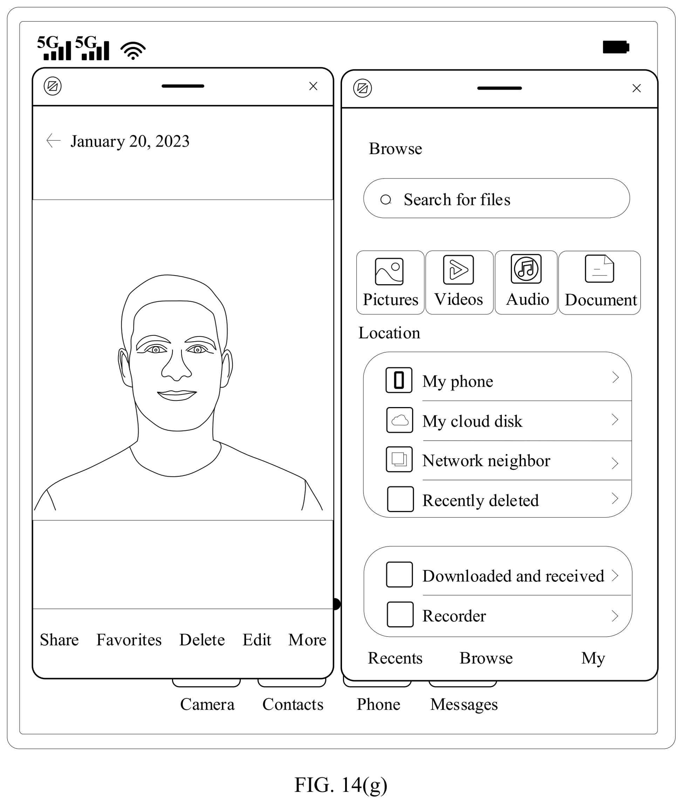

Refer to the GUI shown in FIG. 14(d). The sidebar is displayed on a right side of the interface. The sidebar includes a plurality of applications, such as Email, Memo, Health, File manager, and Browser. The user may tap any application. After detecting an operation of tapping an icon 1403 of File manager by the user, the mobile phone may display a GUI shown in FIG. 14(e), FIG. 14(f), or FIG. 14(g).

Refer to the GUI shown in FIG. 14(e). It can be learned that a main interface for the application File manager is floated on the picture including the portrait.

Refer to the GUI shown in FIG. 14(f). It can be learned that in this case, the main interface for the application File manager is used as a temporary task and is displayed on split screens with the picture including the portrait. That is, the main interface for the application File manager is displayed on a right side of the screen, and the picture including the portrait is displayed on a left side of the screen.

Refer to the GUI shown in FIG. 14(g). It can be learned that in this case, both the main interface for the application File manager and the picture including the portrait are both floated on the home screen of the mobile phone.

According to the solution provided in this embodiment of this application, if full-screen content is displayed on a current interface, after the user starts an application through the sidebar, a main interface for the application may be floated on the displayed full-screen content, or the main interface for the application and the full-screen content may be displayed on split screens, or the main interface for the application and the full-screen content may be both floated on the home screen of the mobile phone. In this way, a problem of user experience interruption during cross-application redirection can be resolved, thereby improving user experience.

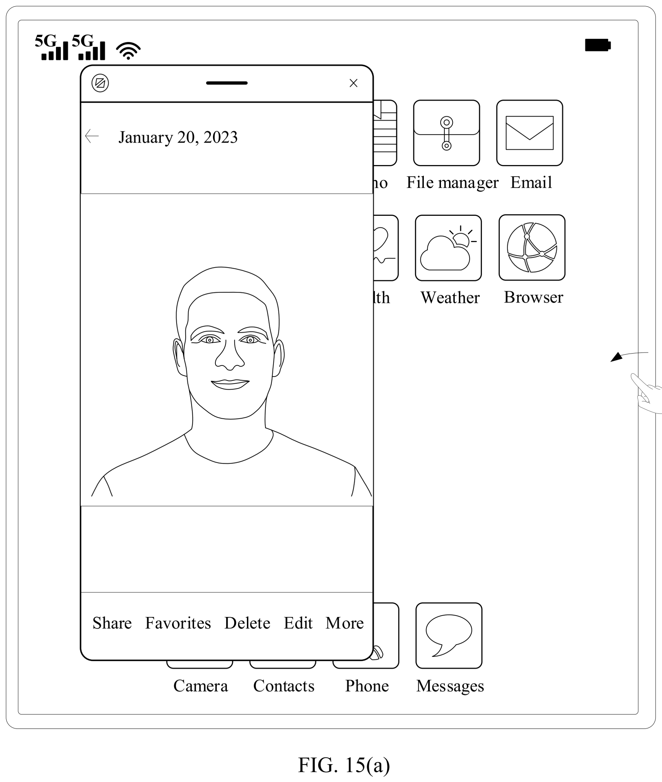

FIG. 15(a) to FIG. 15(d) show a group of GUIs of a mobile phone. FIG. 15(a) to FIG. 15(d) show interfaces displayed after a user opens content through a sidebar when there is already a floating window on a current interface.

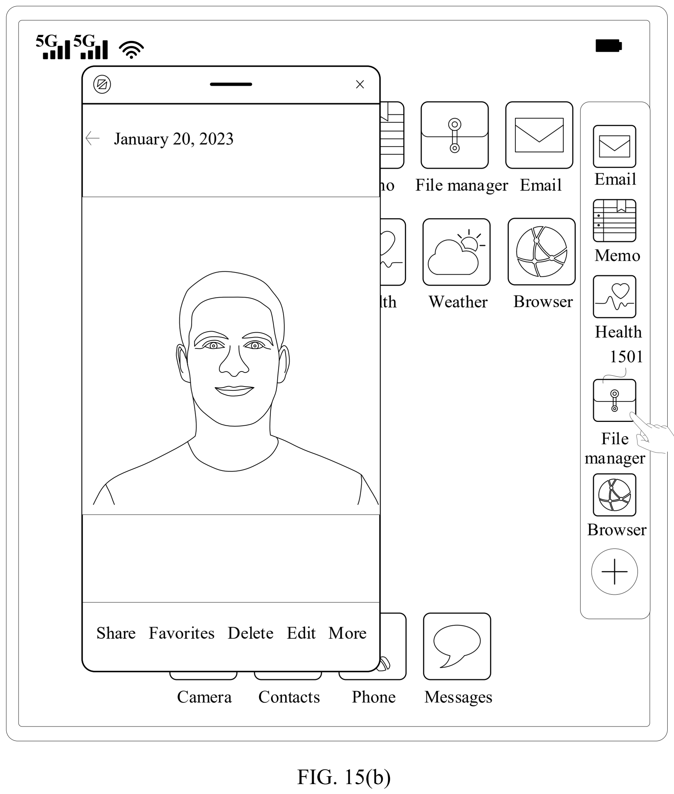

Refer to a GUI shown in FIG. 15(a). The GUI is a home screen of the mobile phone, and a picture including a portrait is floated on the home screen of the mobile phone. When detecting that the user opens the sidebar according to a direction shown in the figure, the mobile phone may display a GUI shown in FIG. 15(b).

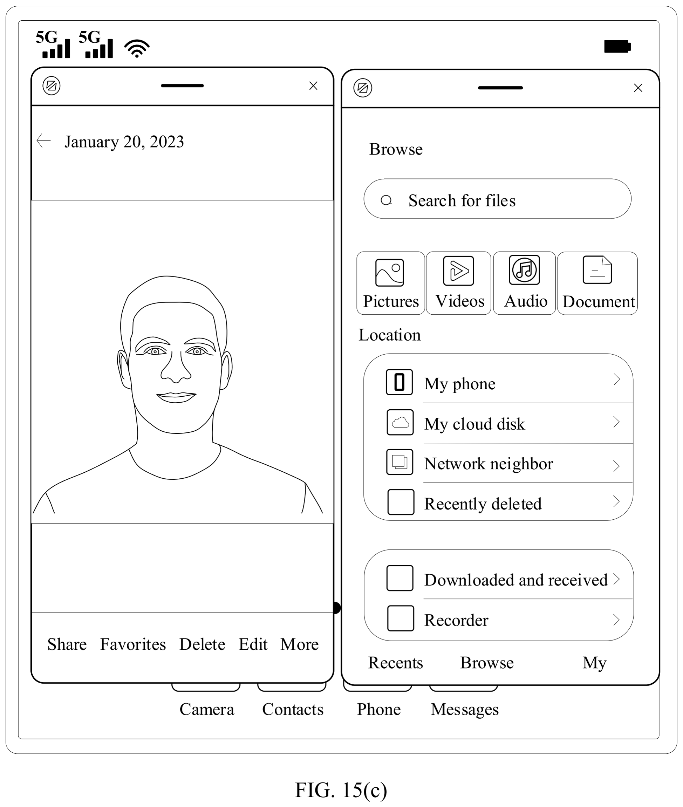

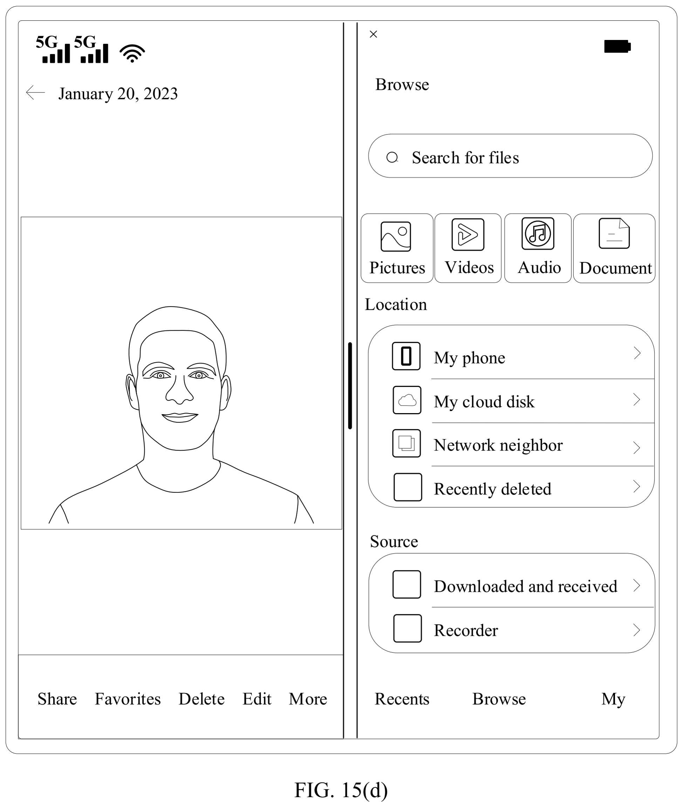

Refer to the GUI shown in FIG. 15(b). The sidebar is displayed on a right side of the interface. The sidebar includes a plurality of applications, such as Email, Memo, Health, File manager, and Browser. The user may tap any application. After detecting an operation of tapping an icon 1501 of File manager by the user, the mobile phone may display a GUI shown in FIG. 15(c) or FIG. 15(d).

Refer to the GUI shown in FIG. 15(c). It can be learned that in this case, both a main interface for the application File manager and the picture including the portrait are both floated on the home screen of the mobile phone.

Refer to the GUI shown in FIG. 15(d). It can be learned that in this case, the main interface for the application File manager is used as a temporary task and is displayed on split screens with the picture including the portrait. That is, the main interface for the application File manager is displayed on a right side of the screen, and the picture including the portrait is displayed on a left side of the screen.

According to the solution provided in this embodiment of this application, if there is already a floating window on a current interface, after the user starts an application through the sidebar, a main interface for the application and the floating window may be both floated on the home screen of the mobile phone, or the main interface for the application and the floating window may be displayed on split screens. In this way, a problem of user experience interruption during cross-application redirection can be resolved, thereby improving user experience.

In addition, when the user screen mirrors content on a device having a small screen to a device having a large screen, user experience may also be not interrupted through screen mirroring.

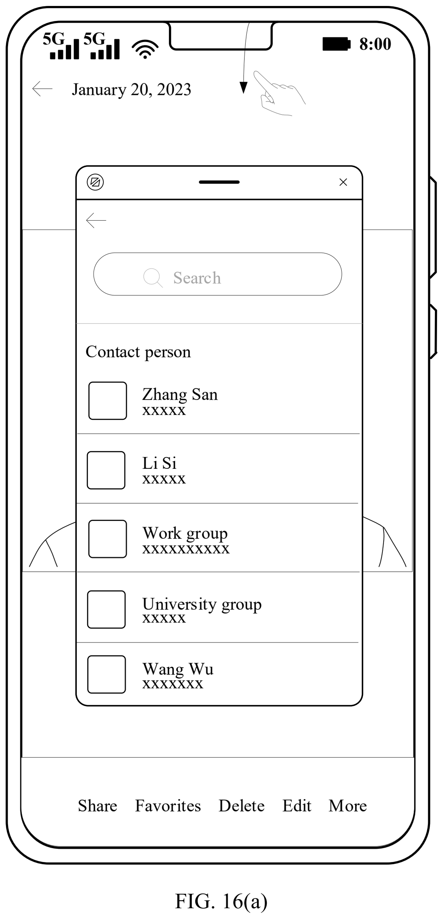

FIG. 16(a) to FIG. 16(c) show a group of GUIs of a mobile phone. FIG. 16(a) to FIG. 16(c) show interfaces displayed when a user screen mirrors a mobile phone to a television if there is already a floating window on a current interface.

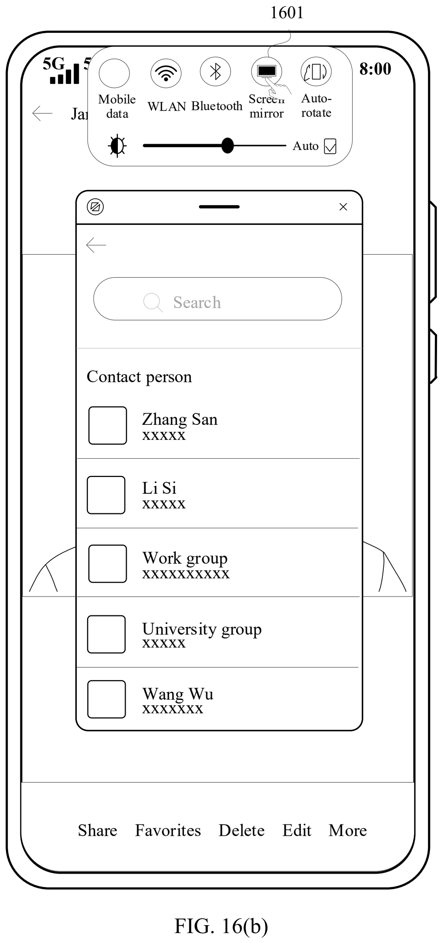

Refer to a GUI shown in FIG. 16(a). In this case, a main interface for an application 1 is floated on a picture including a portrait. When detecting that the user slides downward with a finger according to a direction shown in the figure, the mobile phone may display a GUI shown in FIG. 16(b).

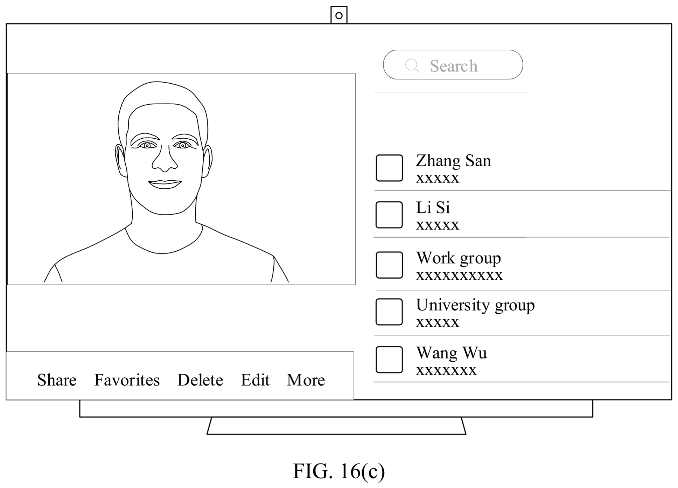

Refer to the GUI shown in FIG. 16(b). It can be learned that in this case, a slide-down notification bar interface is displayed on a screen of the mobile phone. The slide-down notification bar interface includes a plurality of icons, such as an icon of Mobile data, an icon of WLAN, an icon of Bluetooth, and an icon of Screen mirror. After detecting an operation of tapping the icon 1601 of Screen mirror by the user, the mobile phone screen mirrors a current interface of the mobile phone to the television. In this case, the television may display a GUI shown in FIG. 16(c).

Refer to the GUI shown in FIG. 16(c). In this case, the main interface for the application 1 and the picture including the portrait are displayed on split screens.

According to the solution provided in this embodiment of this application, when a floating window on a current interface of a device having a small screen is floated on a picture, if the user screen mirrors content on the device having a small screen to a device having a large screen, the device having a large screen may display content in the floating window and the picture on split screens. In this way, user experience is not interrupted during cross-device redirection, thereby improving user experience.

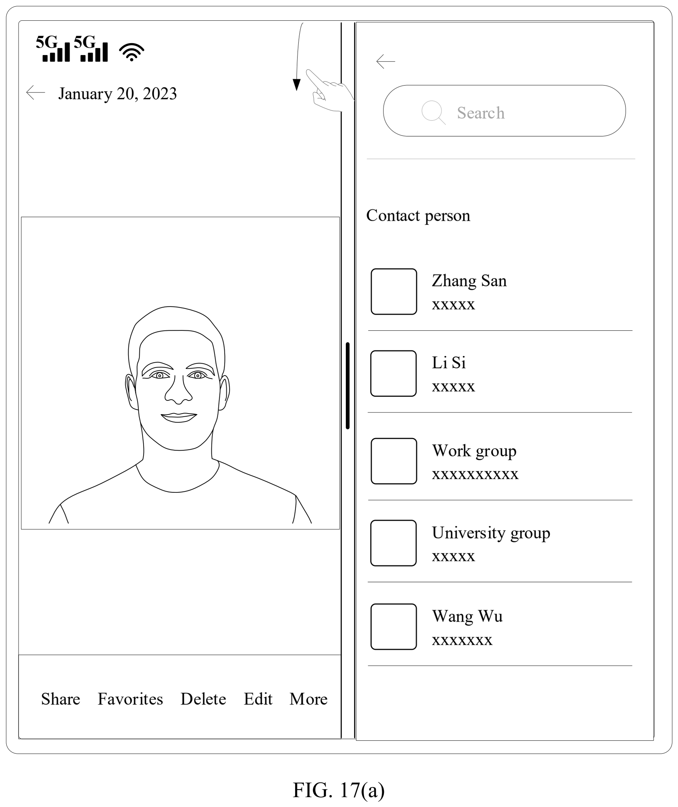

FIG. 17(a) to FIG. 17(c) show a group of GUIs of a mobile phone. FIG. 17(a) to FIG. 17(c) show interfaces displayed when a user screen mirrors a mobile phone to a television if a current interface is already a split-screen interface.

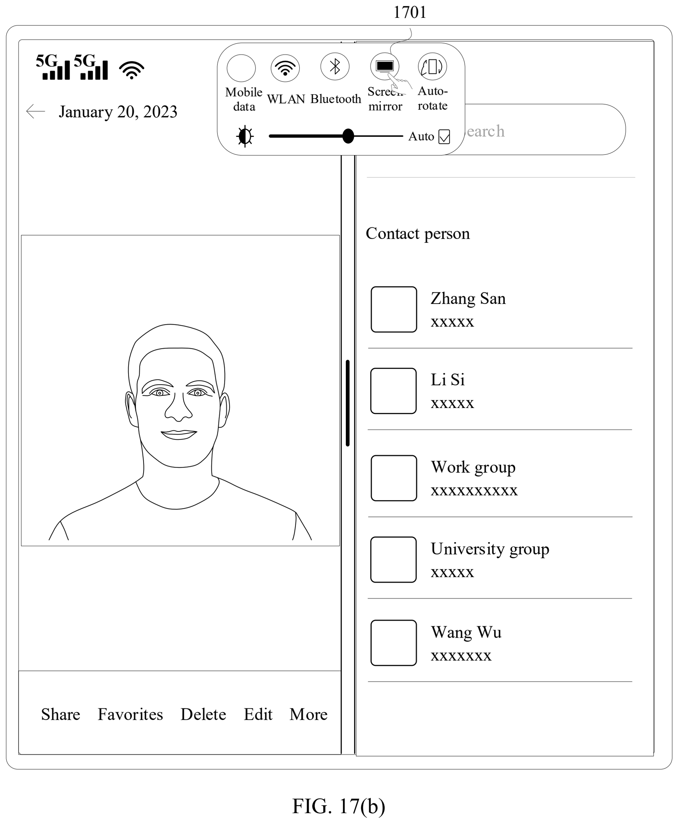

Refer to a GUI shown in FIG. 17(a). In this case, a main interface for an application 1 and a picture including a portrait are displayed on split screens. When detecting that the user slides downward with a finger according to a direction shown in the figure, the mobile phone may display a GUI shown in FIG. 17(b).

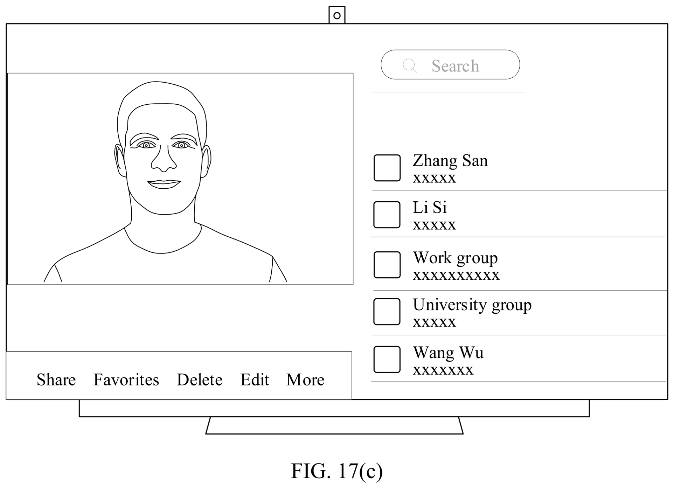

Refer to the GUI shown in FIG. 17(b). It can be learned that in this case, a slide-down notification bar interface is displayed on a screen of the mobile phone. The slide-down notification bar interface includes a plurality of icons, such as an icon of Mobile data, an icon of WLAN, an icon of Bluetooth, and an icon of Screen mirror. After detecting an operation of tapping the icon 1701 of Screen mirror by the user, the mobile phone screen mirrors a current interface of the mobile phone to the television. In this case, the television may display a GUI shown in FIG. 17(c).

Refer to the GUI shown in FIG. 17(c). In this case, the main interface for the application 1 and the picture including the portrait are displayed on split screens.

According to the solution provided in this embodiment of this application, when a current interface of a device having a small screen is already a split-screen interface, if the user screen mirrors content on an electronic device having a small screen to an electronic device having a large screen, the electronic device having a large screen may also perform split-screen display. In this way, user experience is not interrupted during cross-device redirection, thereby improving user experience.

Similarly, other cases in FIG. 3(a) to FIG. 15(d) are not described one by one.

It should be noted that the split screens mentioned in the foregoing examples may alternatively be vertical split screens. This is not limited. In addition, for horizontal split screens mentioned in the foregoing examples, a temporary split screen may alternatively be displayed on a left side of a screen. This is not limited.

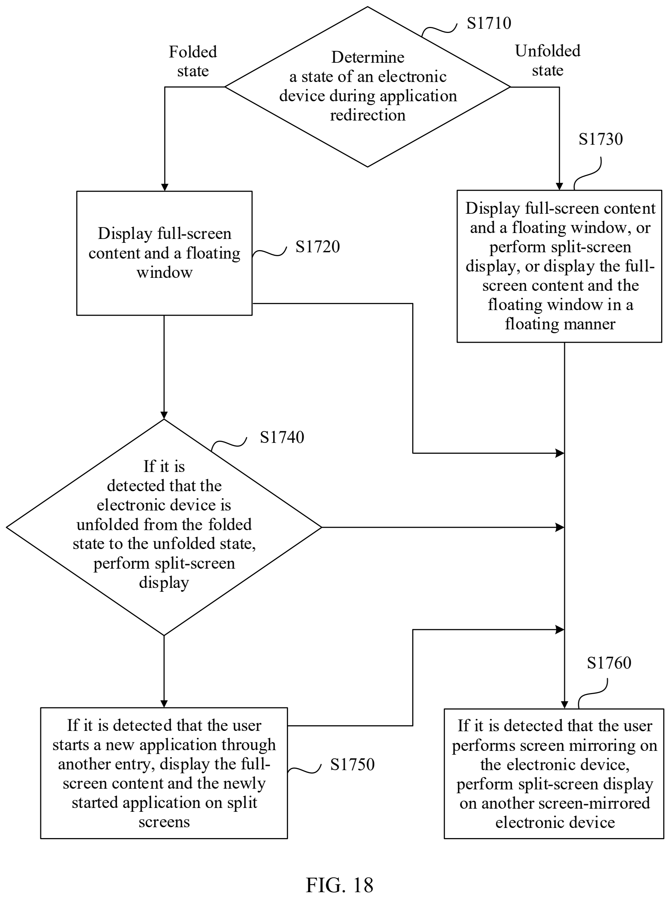

FIG. 18 is a diagram of a display method according to an embodiment of this application. The method may be performed by the mobile phone in the foregoing examples, and the method may include steps S1710 to S1760.

S1710: Determine a state of an electronic device during application redirection, and if the electronic device is in a folded state, perform step S1720, or if the electronic device is in an unfolded state, perform step S1730.

The application redirection in this embodiment of this application may be understood as follows. An application is redirected to another application. For example, a group of GUIs shown in FIG. 3(a) to FIG. 3(e) or FIG. 4(a) to FIG. 4(e) show a process in which a user sends a picture to an app 1. That is, Gallery is redirected to the app 1. For another example, a group of GUIs shown in FIG. 5(a) and FIG. 5(b) show a process in which the user taps a link in an article "Winter outfits" to access the link. That is, an application corresponding to the article "Winter outfits" is redirected to an application corresponding to the link. For another example, a group of GUIs shown in FIG. 6(a) and FIG. 6(b) show a process in which the user taps a map in an interface of a chat with Zhang San. That is, an application corresponding to the interface of a chat with Zhang San is redirected to the map. Other examples are possible and are not enumerated one by one.

S1720: Display full-screen content and a floating window.

S1730: Display full-screen content and a floating window, or perform split-screen display, or display the full-screen content and the floating window in a floating manner.

In this embodiment of this application, during application redirection, if the electronic device is in the folded state, the electronic device displays the full-screen content and the floating window. For example, in the group of GUIs shown in FIG. 3(a) to FIG. 3(e), the user sends the picture to the app 1, and the interface displays the app 1 being floated on the picture. In this case, the full-screen content may be understood as the picture, and the floating window may be understood as the app 1 floated on the picture.

During application redirection, if the electronic device is in the unfolded state, one manner may be performing split-screen display. For example, in the group of GUIs shown in FIG. 4(a) to FIG. 4(e), the user sends the picture to the app 1, and the interface displays the picture and the app 1 on split screens. For another example, in the group of GUIs shown in FIG. 5(a) and FIG. 5(b), the user taps the link in article content "Winter outfits" to access the link, and the article content "Winter outfits" and content corresponding to the link are displayed on split screens, and the like.

During application redirection, if the electronic device is in the unfolded state, another manner may be displaying the full-screen content and the floating window. For example, in a group of GUIs shown in FIG. 14(a) to FIG. 14(g), the electronic device currently displays the picture. When the user starts File manager from a sidebar, File manager is floated on the picture. In this case, the full-screen content may be understood as the picture, and the floating window may be understood as File manager floated on the picture. For details, refer to a display process from FIG. 14(d) and FIG. 14(e).

During application redirection, if the electronic device is in the unfolded state, still another manner may be displaying both the full-screen content and the floating window in a floating manner. For example, in the group of GUIs shown in FIG. 14(a) to FIG. 14(g), the electronic device currently displays the picture. When the user starts File manager from the sidebar, File manager and the picture are both floated on a home screen of the electronic device. In this case, the full-screen content may be understood as the picture, and the floating window may be understood as File manager. For details, refer to a display process from FIG. 14(d) to FIG. 14(g).

S1740: If it is detected that the electronic device is unfolded from the folded state to the unfolded state, perform split-screen display.

In this embodiment of this application, when the mobile phone is in the folded state, the mobile phone displays the full-screen content and the floating window. If detecting that the electronic device is unfolded from the folded state to the unfolded state, the electronic device may display the full-screen content and the floating window on split screens. For example, in a group of GUIs shown in FIG. 9(a) to FIG. 9(d), the user unfolds the electronic device from the folded state to the unfolded state. In the folded state, the main interface for the application 1 is originally displayed in a floating manner on the picture including the portrait, and in the unfolded state, the application 1 and the picture including the portrait are displayed on split screens.

S1750: If it is detected that the user starts a new application through another entry, display the full-screen content and the newly started application on split screens.

In this embodiment of this application, when the interface of the electronic device performs split-screen display, if it is detected that the user starts a new application through another entry (the another entry may be the sidebar, a notification, or the like), the interface may display the full-screen content and the newly started application on split screens. In a group of GUIs shown in FIG. 10(a) to FIG. 10(f), when the interface displays the main interface for the application 1 and the picture including the portrait on split screens, after the user opens a notification message, the interface displays content of the notification message and the picture including the portrait on split screens.

Certainly, in some possible implementations, when the interface of the electronic device performs split-screen display, if it is detected that the user starts a new application through another entry, the interface may alternatively display the main interface for the application 1 and the content of the notification message on split screens. This is not limited.

In some other possible implementations, when the screen of the electronic device permits, if it is detected that the user starts a new application through another entry, the interface may alternatively display the main interface for the application 1, the content of the notification message, and the picture including the portrait on split screens. This is not limited.

S1760: If it is detected that the user performs screen mirroring on the electronic device, perform split-screen display on another screen-mirrored electronic device.

In this embodiment of this application, a size of the another screen-mirrored electronic device is greater than a size of the electronic device. For example, the electronic device may be a mobile phone, and the another screen-mirrored electronic device may be a television.

The mobile phone and the television are used as an example. Regardless of whether an interface of the mobile phone displays the full-screen content and the floating window, or performs split-screen display, or displays the full-screen content and the floating window in a floating manner, when the user screen mirrors the mobile phone interface to the television, an interface of the television performs split-screen display.

For example, in a group of GUIs shown in FIG. 16(a) to FIG. 16(c), the interface of the mobile phone displays the main interface for the application 1 being floated on the picture including the portrait. When the user screen mirrors the interface of the mobile phone to the television, the interface of the television displays the main interface for the application 1 and the picture including the portrait on split screens.

For another example, in a group of GUIs shown in FIG. 17(a) to FIG. 17(c), the interface of the mobile phone displays the main interface for the application 1 and the picture including the portrait on split screens. When the user screen mirrors the interface of the mobile phone to the television, the interface of the television also displays the main interface for the application 1 and the picture including the portrait on split screens.

The split screens in this embodiment of this application may be horizontal split screens, or may be vertical split screens, and sizes of the split screens may be the same or may be different. This is not limited. In addition, a position of an application in a screen splitting process is not specifically limited. For example, a newly started application may be on a left side of an interface, or may be on a right side of the interface, or may be on an upper side of the interface, or may be on a lower side of the interface. This is not limited.

It should be understood that a position and a size of the floating window in this embodiment of this application may be adjusted. This is not limited.

In addition, in some possible implementations, the electronic device in the folded state may also perform split-screen display. When the user unfolds the electronic device to the unfolded state, one application may be floated on another application. This is not limited.

According to the solution provided in this embodiment of this application, during application redirection, the electronic device may display an interface based on a state of the electronic device. When the mobile phone is in the folded state, during application redirection, a newly started application may be floated on an original interface. For example, if the user shares a picture to the application 1, the main interface for the application 1 is floated on the picture, so that the user can continue to view the shared picture in a process of using the application 1. When the mobile phone is in the unfolded state, during application redirection, a newly started application and an original interface may be displayed on split screens. For example, when the user shares a picture to the application 1, the main interface for the application 1 and the picture may be displayed on split screens, so that the user can continue to view the shared picture in a process of using the application 1. In other words, when the user switches from an application to another application, an interface may simultaneously display content of the two applications. In this way, a problem of user experience interruption during cross-application redirection can be resolved, thereby improving user experience. In addition, if the interface of the electronic device in the folded state displays a floating window that is floated on a picture, when the electronic device is unfolded from the folded state to the unfolded state, the picture and content corresponding to the floating window may be displayed on split screens. This can ensure that user experience is not interrupted when a state of the electronic device changes, thereby further improving user experience. Still further, if a current interface displays a floating window that is floated on a picture, when the user starts a new application through another entry, the picture and the newly started application may be displayed on split screens. In this way, a problem of user experience interruption during cross-application redirection can be resolved, thereby improving user experience. In addition, if the user screen mirrors content on an electronic device having a small screen onto an electronic device having a large screen, the electronic device having a large screen may also perform split-screen display. In this way, user experience is not interrupted during cross-device redirection, thereby further improving user experience.

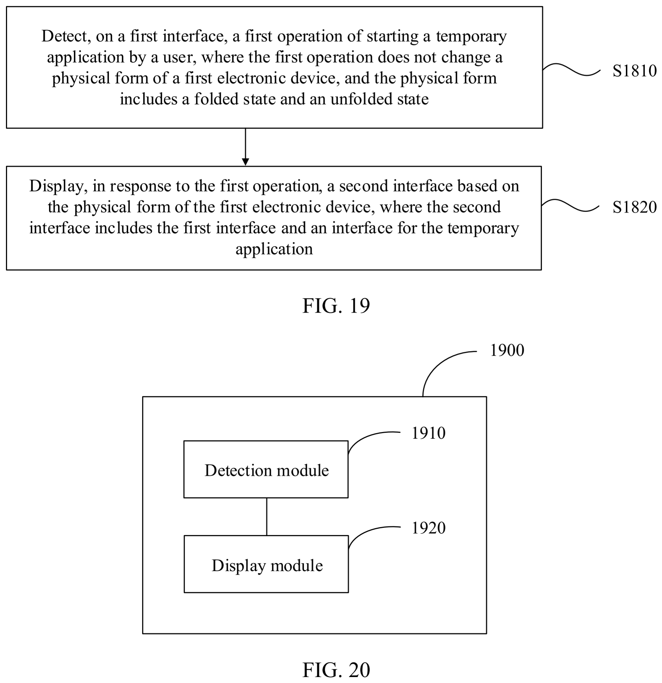

FIG. 19 is a diagram of a display method according to an embodiment of this application. The method may be applied to a first electronic device having a foldable display, and the first electronic device displays a first interface for a first application. The first electronic device may be the mobile phone in the foregoing examples. The method may include steps S1810 and S1820.

S1810: Detect, on the first interface, a first operation of starting a temporary application by a user, where the first operation does not change a physical form of the first electronic device, and the physical form includes a folded state and an unfolded state.

In this embodiment of this application, that the first operation does not change a physical form of the first electronic device may be understood as follows: If the physical form of the first electronic device is in the folded state before the first operation, the physical form of the first electronic device is still in the folded state after the first operation; or if the physical form of the first electronic device is in the unfolded state before the first operation, the physical form of the first electronic device is still in the unfolded state after the first operation.

S1820: Display, in response to the first operation, a second interface based on the physical form of the first electronic device, where the second interface includes the first interface and an interface for the temporary application.

In this embodiment of this application, the first operation may be an operation of starting the temporary application by the user. Therefore, the interface for the temporary application is related to the first operation. In other words, the interface for the temporary application appears because of the first operation of the user. For example, in a group of GUIs shown in FIG. 3(a) to FIG. 3(e), the first operation may be sending, be the user, a picture including a portrait to an app 1. Therefore, the interface for the temporary application is an interface for the app 1. For another example, in a group of GUIs shown in FIG. 5(a) and FIG. 5(b), the first operation may be an action of tapping a link by the user. Therefore, the interface for the temporary application is an interface related to the link. Other examples are possible and are not enumerated one by one.

According to the solution provided in this embodiment of this application, the first electronic device detects, on the first interface for the first application, the first operation of starting the temporary application by the user, and the first operation does not change the physical form of the first electronic device. In response to the first operation, the first electronic device may display the second interface. The second interface includes the first interface and the interface for the temporary application. When the user switches from the first application including the first interface to the temporary application, the first electronic device may simultaneously display content of the two applications based on a current physical form of the first electronic device. In this way, a problem of user experience interruption during cross-application redirection can be resolved, thereby improving user experience.

Optionally, in some embodiments, the second interface may be displayed in one of the following manners:
the interface for the temporary application is displayed on the first interface in a floating manner, the interface for the temporary application and the first interface are displayed on split screens, and the interface for the temporary application and the first interface are both floated on a home screen of the first electronic device.

According to the solution provided in this embodiment of this application, in response to the first operation, the first electronic device may display the second interface. The second interface includes the first interface and the interface for the temporary application. The second interface may be specifically displayed in one of the following manners: the interface for the temporary application is displayed on the first interface in a floating manner, the interface for the temporary application and the first interface are displayed on split screens, and the interface for the temporary application and the first interface are both floated on the home screen of the first electronic device. In this way, a problem of user experience interruption during cross-application redirection can be resolved, thereby improving user experience.

Optionally, in some embodiments, if the first electronic device is in the folded state, the second interface includes the interface for the temporary application being displayed on the first interface in a floating manner; or
if the first electronic device is in the unfolded state, the second interface includes the interface for the temporary application and the first interface being displayed on split screens; or the second interface includes the interface for the temporary application being displayed on the first interface in a floating manner; or the second interface includes the interface for the temporary application and the first interface being both floated on the home screen of the first electronic device.

According to the solution provided in this embodiment of this application, when the mobile phone is in the folded state, the interface for the temporary application may be displayed on the first interface in a floating manner. When the mobile phone is in the unfolded state, the interface for the temporary application may be displayed on the first interface in a floating manner, or the interface for the temporary application and the first interface may be displayed on split screens, or the interface for the temporary application and the first interface may be both floated on the home screen of the first electronic device. In response to the first operation, the first electronic device displays an interface based on the physical form of the first electronic device, so that user experience can be further improved.

Optionally, in some embodiments, if the second interface includes the interface for the temporary application being displayed on the first interface in a floating manner, the method further includes:
displaying a third interface in response to a second operation. The third interface includes the interface for the temporary application and the first interface being displayed on split screens, and the second operation changes the physical form of the first electronic device.

According to the solution provided in this embodiment of this application, if the second interface includes the interface for the temporary application being displayed on the first interface in a floating manner, the third interface is displayed in response to the second operation. The third interface includes the interface for the temporary application and the first interface being displayed on split screens. This can ensure that user experience is not interrupted when the physical form of the first electronic device changes. In addition, the user can clearly view content of the interface for the temporary application and content of the first interface, thereby further improving user experience.

Optionally, in some embodiments, the third interface further includes a first control, and the first control is used to control interface content of the temporary application to be displayed or not displayed.

The first control in this embodiment of this application may be the control "×" in FIG. 9(b), and the user may tap the control, so that the interface for the temporary application is not displayed. Alternatively, the first control may be the control " 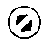 " shown in FIG. 9(c), and the user may tap the control, so that the interface for the temporary application is not displayed.

According to the solution provided in this embodiment of this application, the third interface may further include the first control used to control interface content of the temporary application to be displayed or not displayed. The user may tap the control to close split-screen display, so that user experience can be further improved.

Optionally, in some embodiments, the interface for the temporary application includes interfaces for a plurality of temporary applications, the interfaces for the plurality of temporary applications are all displayed on the first interface in a floating manner, the third interface includes an interface for a first temporary application and the first interface being displayed on split screens, and the first temporary application is a focused application in the plurality of temporary applications.

The focused application in this embodiment of this application may be understood as an application selected by the user.

Certainly, in some possible implementations, the first temporary application may alternatively be an application that is in the plurality of temporary applications and that is displayed at an uppermost layer on an interface of the first electronic device. This is not limited.

According to the solution provided in this embodiment of this application, if the interface for the temporary application includes the interfaces for the plurality of temporary applications, and the interfaces for the plurality of temporary applications are all displayed on the first interface in a floating manner, the third interface may include the interface for the first temporary application and the first interface being displayed on split screens, and the first temporary application is a focused application in the plurality of temporary applications. This can ensure that user experience is not interrupted when the physical form of the electronic device changes. In addition, because the first temporary application included in the third interface is a focused application in the plurality of temporary applications, user experience can be further improved.

Optionally, in some embodiments, the third interface further includes a second control, and the second control is used to control to switch to and display the interfaces for the plurality of temporary applications.

According to the solution provided in this embodiment of this application, the third interface further includes the second control, and the second control is used to control to switch to and display the interfaces for the plurality of temporary applications. The user may tap the control to display the picture in full screen, or close a current temporary split screen and display content of another floating window, so that user experience can be further improved.

Optionally, in some embodiments, the method further includes:
displaying a fourth interface in response to a third operation. The fourth interface includes an interface for a second temporary application and the first interface being displayed on split screens, and the second temporary application includes at least one application in the plurality of temporary applications.

According to the solution provided in this embodiment of this application, the fourth interface is displayed in response to the third operation. The fourth interface may include the interface for the second temporary application and the first interface being displayed on split screens. The second temporary application includes at least one application in the plurality of temporary applications, and the at least one application in the plurality of temporary applications may be displayed through the third operation. The user may further select a temporary application expected to be displayed, so that user experience can be further improved.

Optionally, in some embodiments, if the second interface includes the interface for the temporary application being displayed on the first interface in a floating manner, the method further includes:
displaying a fifth interface in response to a fourth operation of starting a second application by the user. The fifth interface includes the interface for the temporary application and an interface for the second application being both floated on the first interface, or the fifth interface includes the interface for the temporary application and the interface for the second application being displayed on split screens.

According to the solution provided in this embodiment of this application, the fifth interface is displayed in response to the fourth operation of starting the second application by the user. The fifth interface may include the interface for the temporary application and the interface for the second application being both floated on the first interface, or the fifth interface includes the interface for the temporary application and the interface for the second application being displayed on split screens. In this way, a problem of user experience interruption during cross-application redirection can be resolved, thereby improving user experience.

Optionally, in some embodiments, the method further includes:
sending content of the second interface to the second electronic device in response to a fifth operation. The first interface and the interface for the temporary application that are included in the second interface are displayed on split screens on the second electronic device, and a screen size of the second electronic device is greater than a screen size of the first electronic device.

Correspondingly, for the second electronic device, the method includes:
receiving the content of the second interface sent by the first electronic device, where the second interface includes the first interface for the first application and the interface for the temporary application; and
displaying the first interface for the first application and the interface for the temporary application on split screens.

According to the solution provided in this embodiment of this application, the content of the second interface is sent to the second electronic device in response to the fifth operation, and the second electronic device may display the first interface and the interface for the temporary application that are included in the second interface on split screens on the second electronic device. The screen size of the second electronic device is greater than the screen size of the first electronic device. In this way, user experience is not interrupted during cross-device redirection, thereby improving user experience.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 20 is a possible composition diagram of an electronic device 1900 in the foregoing embodiments. As shown in FIG. 20, the electronic device 1900 may include a detection module 1910 and a display module 1920.

The detection module 1910 may be configured to support the electronic device 1900 in performing step S1810 and the like, and/or used in another process of the technology described in this specification.

The display module 1920 may be configured to support the electronic device 1900 in performing step S1820 and the like, and/or used in another process of the technology described in this specification.

It should be noted that all related content of the steps in the foregoing method embodiments may be cited in function description of corresponding functional modules. Details are not described herein again.

The electronic device provided in this embodiment is configured to perform the foregoing method in this application, and therefore can achieve same effect as the foregoing implementation methods.

When an integrated unit is used, the electronic device may include a processing module, a storage module, and a communication module. The processing module may be configured to control and manage actions of the electronic device, for example, may be configured to support the electronic device in performing the steps performed by the foregoing units. The storage module may be configured to support the electronic device in storing program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors, or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor and the storage module is a memory, the electronic device in this embodiment may be a device having the structure shown in FIG. 1.

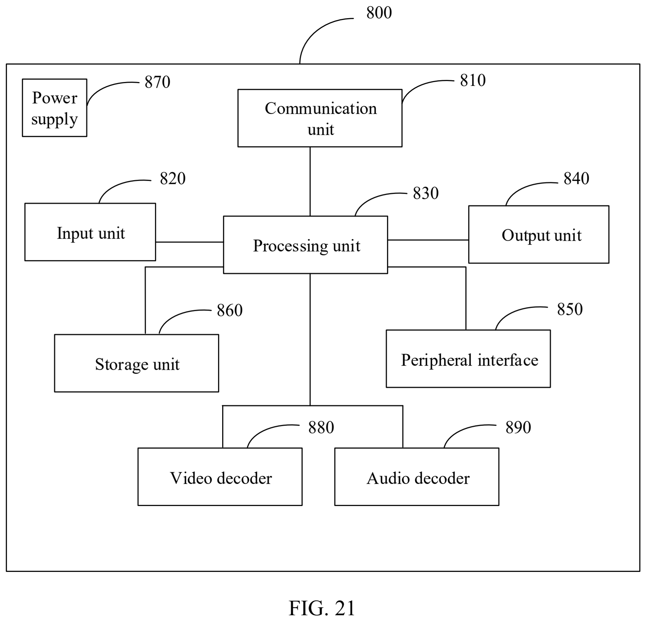

FIG. 21 is another possible composition diagram of an electronic device 800 in the foregoing embodiments. As shown in FIG. 21, the electronic device 800 may include a communication unit 810, an input unit 820, a processing unit 830, an output unit (or may alternatively be referred to as a display unit) 840, a peripheral interface 850, a storage unit 860, a power supply 870, a video decoder 880, and an audio decoder 890.

The communication unit 810 is configured to establish a communication channel, so that the electronic device 800 is connected to a remote server through the communication channel and downloads media data from the remote server. The communication unit 810 may include a communication module such as a WLAN module, a Bluetooth module, an NFC module, or a baseband module, and a radio frequency (radio frequency, RF for short) circuit corresponding to the communication module, and is configured to perform wireless local area network communication, Bluetooth communication, NFC communication, infrared communication, and/or cellular communication system communication, for example, wideband code division multiple access (wideband code division multiple access, W-CDMA) and/or high speed downlink packet access (high speed downlink packet access, HSDPA). The communication unit 810 is configured to control communication of components in the electronic device, and can support direct memory access.

The input unit 820 may be configured to implement interaction between a user and the electronic device and/or input information into the electronic device. In a specific implementation of this application, the input unit may be a touch panel, or may be another human-machine interaction interface, for example, a physical input key or a microphone, or may be another external information capture apparatus, for example, a camera.

The processing unit 830 is a control center of the electronic device, and may be connected to all parts of the entire electronic device through various interfaces and lines, and perform various functions and/or data processing of the electronic device by running or executing a software program and/or a module stored in the storage unit and invoking data stored in the storage unit.

The output unit 840 includes but is not limited to an image output unit and a voice output unit. The image output unit is configured to output a text, a picture, and/or a video. In a specific implementation of this application, the touch panel used by the input unit 820 may alternatively be used as a display panel of the output unit 840. For example, after detecting a gesture operation of touching or approaching the touch panel, the touch panel transmits the gesture operation to the processing unit to determine a type of a touch event, and then the processing unit provides a corresponding visual output on the display panel based on the type of the touch event. In FIG. 21, the input unit 820 and the output unit 840 serve as two separate components to implement input and output functions of the electronic device. However, in some embodiments, the touch panel and the display panel may be integrated to implement the input and output functions of the electronic device. For example, the image output unit may display various graphical user interfaces as virtual control components, including but not limited to a window, a scrollbar, an icon, and a clipboard, so that a user can perform an operation through touching.

The storage unit 860 may be configured to store a software program and a module. The processing unit runs the software program and the module that are stored in the storage unit to perform various function applications of the electronic device and implement data processing.

An embodiment further provides a computer storage medium. The computer storage medium stores computer instructions. When the computer instructions are run on an electronic device, the electronic device is enabled to perform the related method steps, to implement the method in the foregoing embodiments.

An embodiment further provides a computer program product. When the computer program product is run on a computer, the computer is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be indirect couplings or communication connections through some interfaces, apparatuses, or units, and may be in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk drive, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to a first electronic device having a foldable display, the first electronic device displays a first interface for a first application, and the method comprises:
detecting, on the first interface, a first operation of starting a temporary application by a user, wherein the first operation does not change a physical form of the first electronic device, and the physical form comprises a folded state and an unfolded state; and
displaying, in response to the first operation, a second interface based on the physical form of the first electronic device, wherein the second interface comprises the first interface and an interface for the temporary application.

2. The method according to claim 1, wherein the second interface may be displayed in one of the following manners:
the interface for the temporary application is displayed on the first interface in a floating manner, the interface for the temporary application and the first interface are displayed on split screens, and the interface for the temporary application and the first interface are both floated on a home screen of the first electronic device.

3. The method according to claim 1 or 2, wherein if the first electronic device is in the folded state, the second interface comprises the interface for the temporary application being displayed on the first interface in a floating manner; or
if the first electronic device is in the unfolded state, the second interface comprises the interface for the temporary application and the first interface being displayed on split screens; or the second interface comprises the interface for the temporary application being displayed on the first interface in a floating manner; or the second interface comprises the interface for the temporary application and the first interface being both floated on the home screen of the first electronic device.

4. The method according to any one of claims 1 to 3, wherein if the second interface comprises the interface for the temporary application being displayed on the first interface in a floating manner, the method further comprises:
displaying a third interface in response to a second operation, wherein the third interface comprises the interface for the temporary application and the first interface being displayed on split screens, and the second operation changes the physical form of the first electronic device.

5. The method according to claim 4, wherein the third interface further comprises a first control, and the first control is used to control interface content of the temporary application to be displayed or not displayed.

6. The method according to claim 4 or 5, wherein the interface for the temporary application comprises interfaces for a plurality of temporary applications, the interfaces for the plurality of temporary applications are all displayed on the first interface in a floating manner, the third interface comprises an interface for a first temporary application and the first interface being displayed on split screens, and the first temporary application is a focused application in the plurality of temporary applications.

7. The method according to claim 6, wherein the third interface further comprises a second control, and the second control is used to control to switch to and display the interfaces for the plurality of temporary applications.

8. The method according to claim 6 or 7, wherein the method further comprises:
displaying a fourth interface in response to a third operation, wherein the fourth interface comprises an interface for a second temporary application and the first interface being displayed on split screens, and the second temporary application comprises at least one application in the plurality of temporary applications.

9. The method according to any one of claims 1 to 3, wherein if the second interface comprises the interface for the temporary application being displayed on the first interface in a floating manner, the method further comprises:
displaying a fifth interface in response to a fourth operation of starting a second application by the user, wherein the fifth interface comprises the interface for the temporary application and an interface for the second application being both floated on the first interface, or the fifth interface comprises the interface for the temporary application and the interface for the second application being displayed on split screens.

10. The method according to any one of claims 1 to 9, wherein the method further comprises:
sending content of the second interface to the second electronic device in response to a fifth operation, wherein the first interface and the interface for the temporary application that are comprised in the second interface are displayed on split screens on the second electronic device, and a screen size of the second electronic device is greater than a screen size of the first electronic device.

11. A display method, wherein the method is applied to a second electronic device, and the method comprises:
receiving content of a second interface sent by a first electronic device, wherein the second interface comprises a first interface for a first application and an interface for a temporary application, and a screen size of the second electronic device is greater than a screen size of the first electronic device; and
displaying the first interface for the first application and the interface for the temporary application on split screens.

12. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 10 or claim 11.

13. A computer storage medium, comprising computer instructions, wherein when the computer instructions are run on an electronic device, the electronic device is enabled to perform the method according to any one of claims 1 to 10 or claim 11.
